# EUROPÄISCHE PATENTANMELDUNG

(11) **EP 4 763 741 A2**
(43) Veröffentlichungstag der Anmeldung: **24.06.2026**
(21) Anmeldenummer: 26167961.7
(22) Anmeldetag: 10.10.2023
(51) Int. Cl.: B65D 77/20, B65D 25/36, B65D 51/20, B65D 1/26, B65D 1/42, B65D 81/38, B65B 51/02, B65B 51/22, B65B 55/24, B65B 7/28, B65B 57/02

(54) **MEHRWEG-KUNSTSTOFFBEHÄLTER UND VERFAHREN ZUR WIEDERAUFBEREITUNG**

(30) Priorität: 10.10.2022 AT 507832022
(62) Teilanmeldung aus: 23202631.0
(71) Anmelder: Greiner Packaging International GmbH, 4550 Kremsmünster (AT)
(72) Erfinder: LEHNER, Markus, 4563 Micheldorf (AT); AUSSERWÖGER, Günter, 4210 Gallneukirchen (AT); WEINGARTMAIR, Martin, 4731 Prambachkirchen (AT)
(74) Vertreter: Burger, Hannes Alfred

(57) **Zusammenfassung**

Die Erfindung betrifft einen becherförmigen Mehrweg-Kunststoffbehälter (2) dessen offenes Ende (5) einen Siegelrand (22) mit einer Siegelfläche (23) aufweist, welche Siegelfläche (23) derart ausgebildet ist, dass die Siegelfläche (23) mit einer ersten Siegelfolie (24) verbindbar ist. Der Behältermantel (4) weist eine Wandstärke (25) auf, welche von 0,5 mm bis 4,0mm beträgt. Der Siegelrand (22) weist eine Siegelranddicke (26) auf, welche sich in axialer Richtung der Längsachse (8) erstreckt, und welche Siegelranddicke (26) von 0,8 mm bis 4,0 mm beträgt. Die Siegelfläche (23) ist derart ausgebildet, dass die Siegelfläche (23) nach einem Entfernen der ersten Siegelfolie (24) von der Siegelfläche (23) des Siegelrandes (22), und nach einer Reinigung des Mehrweg-Kunststoffbehälters (2) mit einer weiteren Siegelfolie (27) verbindbar ist. Die Erfindung betrifft auch ein Verfahren zur Wiederaufbereitung eines becherförmigen Mehrweg-Kunststoffbehälters.

## Beschreibung

Die Erfindung betrifft einen becherförmigen Mehrweg-Kunststoffbehälter, sowie ein Verfahren zur Wiederaufbereitung eines becherförmigen Mehrweg-Kunststoffbehälters.

Aufgrund von immer höher werdenden Umweltanforderungen an Produkte und Produktverpackungen wird es immer wichtiger, ein Wiederverwenden und damit ein Kreislaufleben, zu ermöglichen. Beim Wiederverwenden soll es dabei möglich sein, Produkte, sowie Produktverpackung ohne oder weitgehend ohne Qualitätseinbußen einer erneuten bzw. mehrmaligen Verwendung zuzuführen. Hierbei ist es weiters erforderlich, dass Produkte und Produktverpackungen ohne unverhältnismäßig großen Reinigungs- und Wiederaufbereitungsaufwand wiederverwendbar gemacht werden können. Produkte und Produktverpackungen, welche zur Wiederverwendung bestimmt sind, sollen daher sowohl nachhaltig herstellbar, als auch auf nachhaltige, also auf ressourcenschonende Art und Weise wiederverwendbar sein oder wiederverwendbar gemacht werden.

Aufgabe der vorliegenden Erfindung war es, die Nachteile des Standes der Technik zu überwinden und einen becherförmigen Mehrweg-Kunststoffbehälter zur Verfügung zu stellen, welcher auf nachhaltige Art und Weise, wiederverwendbar ist.

Diese Aufgabe wird durch eine Vorrichtung und ein Verfahren gemäß den Ansprüchen gelöst.

Die Erfindung betrifft einen becherförmiger Mehrweg-Kunststoffbehälter, welcher Mehrweg-Kunststoffbehälter bevorzugt ein lebensmittelechtes Kunststoffmaterial umfasst, und welcher Mehrweg-Kunststoffbehälter einen Behältermantel umfasst, welcher Behältermantel ein offenes Ende und ein mit einem Boden verschlossenes Ende aufweist, wobei sich eine Längsachse des Mehrweg-Kunststoffbehälters zwischen dem offenen Ende und dem verschlossenes Ende erstreckt, und wobei das offene Ende einen Siegelrand mit einer Siegelfläche aufweist, welche Siegelfläche derart ausgebildet ist, dass die Siegelfläche mit einer ersten Siegelfolie verbindbar ist, also auf diese aufsiegelbar ist.

Dabei ist vorgesehen, dass der Behältermantel eine Wandstärke aufweist, welche Wandstärke von 0,5 mm bis 4,0 mm beträgt, und dass der Siegelrand eine Siegelranddicke aufweist, welche Siegelranddicke sich in axialer Richtung der Längsachse erstreckt, und welche Siegelranddicke von 0,8 mm bis 4,0 mm beträgt, und dass die Siegelfläche derart ausgebildet ist, dass die Siegelfläche nach einem Entfernen der ersten Siegelfolie von der Siegelfläche des Siegelrandes, und nach einer Reinigung des Mehrweg-Kunststoffbehälters mit einer weiteren Siegelfolie verbindbar ist.

Bevorzugt beträgt die Wandstärke des Behältermantels von 1,0 mm bis 2,5 mm. Besonders bevorzugt ist eine Wandstärke von 1,3 mm bis 2,0 mm, wobei sich insbesondere eine Wandstärke von 1,5 mm als vorteilhaft herausgestellt hat. Dies im Gegensatz zu herkömmlichen Wegwerk-Kunststoffbehältern, welche üblicherweise eine Wandstärke von 0,3 mm bis 1,0 mm aufweisen.

Bevorzugt beträgt die Siegelranddicke des Siegelrandes von 1,0 mm bis 2,5 mm. Besonders bevorzugt ist eine Siegelranddicke von 1,3 mm bis 2,0 mm, wobei sich insbesondere eine Siegelranddicke von 1,5 mm als vorteilhaft herausgestellt hat. Dies im Gegensatz zu herkömmlichen Wegwerk-Kunststoffbehältern, welche üblicherweise eine Siegelranddicke von 0,5 mm bis 0,8 mm aufweisen.

Der erfindungsgemäße becherförmige Mehrweg-Kunststoffbehälter, insbesondere die angegebene Wandstärke des Behältermantels, bringt den überraschenden Vorteil mit sich, dass dieser ausreichend stabil und langlebig ist, um einer Wiederverwendung auch wiederholt zugeführt werden zu können, und zugleich ausreichend leicht ist, um bequem und einfach handhabbar zu sein. Dies sowohl im Hinblick auf einen Warentransport, bei welchem das Gewicht von Verpackungsmaterial im Sinne einer Nachhaltigkeit möglichst geringgehalten werden sollen, als auch im Hinblick auf eine Handhabung durch einen Benutzer, für welchen ein zu hohes Verpackungsgewicht ebenso nachteilig ist. Der erfindungsgemäße becherförmige Mehrweg-Kunststoffbehälter, insbesondere die angegebene Siegelranddicke des Siegelrandes, sowie die Ausbildung der Siegelfläche dergestalt, dass diese nach einer Reinigung wiederverwendbar ist, bringt den überraschenden Vorteil mit sich, dass dieser wiederholt aufbereitet und wiederversiegelt werden kann, ohne oder zumindest weitgehend ohne Abstriche im Hinblick auf die Qualität der Verpackung oder die Versiegelbarkeit in Kauf nehmen zu müssen. Insbesondere in Kombination der erfindungsgemäßen Merkmale wird überraschenderweise ein Mehrweg-Behälter zur Verfügung gestellt, welcher für einen Benutzer dieselben oder annähernd dieselben Vorteile in Bezug auf Nutzung bietet, welche er von einem herkömmlichen Behälter, also von einem Wegwerf-Kunststoffbecher gewohnt ist, und welcher dennoch besonders gut wiederverwendbar ist bzw. besonders einfach Wiederverwendbar gemacht werden kann. Demnach erfüllt der Mehrweg-Behälter sowohl die Anforderungen, die ein Benutzer an die Verpackungsbehälter stellt, als auch die Anforderungen, die die Industrie an einen Mehrweg-Behälter stellt.

Der Begriff Siegelfolie umfasst dabei jegliche in der Fachwelt bekannte Art von Siegelfolie. So sind sowohl Aluminiumfolien, Kunststofffolien, als auch Hybrid- bzw. Kompositfolien bekannt. Je nach Art der Applikation als Aufbringung bzw. Versiegelung können die Siegelfolien verschieden beschaffen sein. Zum Versiegeln sind, um nur einige nicht abschließend zu nennen, Klebeprozesse und auch Schweißprozesse üblich. Siegelfolien sind wie an sich bekannt derart mit einer Siegelfläche eines Siegelrandes verbunden, dass sie einen Behälter oder Becher verschließen, wobei die Verbindung zwischen Siegelfolie und Siegelfläche lösbar ist indem die Siegelfolie von der Siegelfläche abziehbar ist. Dies zumeist mit Hilfe einer ebenfalls durch die Folie gebildeten Abziehlasche. Dadurch erhält ein Benutzer Zugriff zu einem in dem Behälter umfassten Füllgut. Die ursprüngliche, also die erstapplizierte Siegelfolie und die weitere bzw. die weiteren Siegelfolien können dabei gleichartig, aber auch verschiedenartig sein. So kann es auch sein, dass ein Verfahren zum Aufbringen der Siegelfolien stets dieselben Methoden umfasst, oder verschiedene Verfahren zur Applikation durchgeführt werden können.

Die Reinigung des Mehrweg-Kunststoffbehälters kann als Verfahrensschritt im Zuge eines Wiederaufbereitungsverfahren erfolgen. Das Verbinden und damit das Verschließen des Behälters mit einer weiteren Siegelfolie nach der Reinigung kann insbesondere nach einem Gebrauch, einer Reinigung und einer Wiederbefüllung des Mehrweg-Kunststoffbehälters erfolgen.

Es kann auch sein, dass der Behälter, insbesondere die Innenfläche des Behälters und/oder die Siegelfläche mit einer Beschichtung, insbesondere mit einer SiOx Beschichtung ausgebildet ist, welche Beschichtung der Innenfläche bzw. der Siegelfläche eine besonders glatte Oberfläche verleiht. Eine solche Weiterbildung hat den Vorteil, dass dadurch eine gründliche, hygienische Reinigung auch bei mehrmaliger Verwendung und Reinigung verbessert wird. Ein beschichteter Siegelrand hat den Vorteil, dass etwaig anhaftende Rückstände einer vorherigen Siegelfolie bzw. eines Klebers gut entfernbar sind.

Des Weiteren kann es zweckmäßig sein, wenn der Behältermantel einen kegelförmigen Abschnitt aufweist, welcher kegelförmige Abschnitt sich von dem verschlossenen Ende in Richtung zum offenen Ende erstreckt, und dass der Behältermantel einen zylinderförmigen Abschnitt aufweist, welcher zylinderförmige Abschnitt sich von dem offenen Ende in Richtung zum verschlossenen Ende erstreckt, wobei in radialer Richtung zur Längsachse betrachtet, also bei Betrachtung 90° zur Längsachse, ein Kreisquerschnitt des zylinderförmigen Abschnitts größer ist, als ein maximaler Kreisquerschnitt des kegelförmigen Abschnitts. Der kegelförmige Abschnitt ist dabei, wie bei becherförmigen Behältern an sich bekannt, derart ausgerichtet, dass der Durchmesser des kegelförmigen Abschnitts bodenseitig kleiner ist und nach oben hin, also in Richtung des offenen Endes des Behälters kontinuierlich breiter wird.

Dies bringt den Vorteil mit sich, dass ein derart ausgebildeter Becher sowohl besonders gut von einem Benutzer gehalten werden kann, weil der zylinderförmige obere Abschnitt mit seinem größeren Kreisquerschnitt quasi als Anschlag für die Hand bzw. die Finger des Benutzers wirken. Zudem können mehrere derart ausgebildeter Behälter auch platzsparend ineinander steckbar und stapelbar sein.

Ferner kann vorgesehen sein, dass zwischen dem kegelförmigen Abschnitt und dem zylinderförmigen Abschnitt ein kegelförmiger Übergangsabschnitt ausgebildet ist, wobei ein erster Winkel zwischen der Längsachse und dem kegelförmigen Abschnitt kleiner ist als ein zweiter Winkel zwischen der Längsachse und dem kegelförmiger Übergangsabschnitt. Es kann auch sein, dass der Übergangsabschnitt zumindest im Wesentlichen kegelförmig ist und dass in dem Übergangsbereich zwischen dem kegelförmigen Abschnitt und dem Übergangsabschnitt, sowie in dem Übergangsbereich zwischen dem Übergangsabschnitt und dem zylindrischen Abschnitt jeweils eine in Umfangsrichtung umlaufende Fase, Hohlkehle oder nach innen in Richtung Längsachse gehkehrte Rundung ausgebildet ist. Bei Betrachtung des Behälters in radialer Richtung zur Längsachse, respektive 90° zur Längsachse, entspricht ein minimaler Kreisquerschnitt des Übergangsabschnitts dem maximalen Kreisquerschnitt des kegelförmigen Abschnitts, und ein maximaler Kreisquerschnitt des Übergangsabschnitts entspricht dem Kreisquerschnitt des zylinderförmigen Abschnitts.

Dies bringt den Vorteil mit sich, dass durch einen zweiten Winkel, der größer ist als ein erster Winkel ein Übergangsabschnitt geschaffen wird, welcher eine Durchmesservergrößerung vom kegelförmigen zum zylindrischen Abschnitt auf technisch einfache und optisch ansprechende Art und Weise ermöglicht.

Darüber hinaus kann vorgesehen sein, dass der Behältermantel mit Vertiefungen ausgebildet ist, welche Vertiefungen sich im Wesentlichen parallel zur Längsachse über den zylinderförmigen Abschnitt erstrecken. Wenn sich die Vertiefungen zusätzlich auch über den Übergangsabschnitt oder über einen Teil des Übergangsabschnitts erstrecken, und wenn der Übergangsabschnitt kegelförmig ist, so sind die Vertiefungen im Bereich des Übergangsabschnitts parallel zum Mantel des Übergangsabschnitts ausgerichtet, anstelle parallel zur Längsachse. Die Vertiefungen können dabei beispielsweise rillenförmig sein und bei Betrachtung in axialer Richtung, also entlang der Längsachse einen halbkreisförmigen oder kreissegmentförmigen Querschnitt aufweisen. Dabei können die Vertiefungen gleichartig, aber auch verschiedenartig geformt sein und jeweils gleiche, aber auch unterschiedliche Längen bzw. Längserstreckungen aufweisen.

Dies bringt den Vorteil mit sich, dass der Behälter im Zuge einer Reinigung, welche insbesondere bei der Wiederaufbereitung für eine Wiederverwendung durchgeführt werden kann, vergleichsweise schnell und ohne oder zumindest weitgehend ohne den Einsatz von zusätzlichem Energieaufwand durch Wärme oder Konvektion, trocknet. Insbesondere kann durch das Vorsehen von Vertiefungen in dem zylindrischen Abschnitt, sowie gegebenenfalls auch in dem Übergangsabschnitt eine gute Belüftung ermöglicht werden.

Vorteilhaft ist auch eine Ausprägung, gemäß welcher vorgesehen sein kann, dass die Vertiefungen in radialer Richtung zur Längsachse betrachtet eine Tiefe aufweisen, welche Tiefe von 1% bis 70% der Wandstärke des Behältermantels beträgt.

Dies bringt den Vorteil mit sich, dass der Behälter im Zuge einer Reinigung, welche insbesondere bei der Wiederaufbereitung für eine Wiederverwendung durchgeführt werden kann, vergleichsweise schnell und ohne oder zumindest weitgehend ohne den Einsatz von zusätzlichem Energieaufwand durch Wärme oder Konvektion, trocknet.

Gemäß einer Weiterbildung ist es möglich, dass ein Masseschwerpunkt des Mehrweg-Kunststoffbehälters außerhalb der Längsachse liegt. Dies kann beispielsweise durch Unterschiede in der Materialdicke realisiert werden. Es ist aber auch denkbar, dass dies durch unterschiedliche Materialien mit verschiedener Dichte realisiert wird. Üblicherweise sind Behälter symmetrisch ausgebildet und weisen einen Schwerpunkt auf, welcher auf der Längsachse liegt. Eine Ausbildung, wonach der Schwerpunkt außerhalb der Längsachse liegt, bringt den Vorteil mit sich, dass ein solcher Behälter, wenn er in einem Leergutautomaten für Mehrweg-behälter oder in einer Waschanlage transportiert wird, und dabei seitlich liegt, also nicht auf seinem Boden steht, sondern entlang seiner Mantelfläche geführt wird, nicht oder nur wenig bzw. vergleichsweise wenig zu Rollbewegungen neigt. So kann generell eine gute Transportierbarkeit bzw. Förderbarkeit ermöglicht werden, und im speziellen auch eine Detektion / Formerkennung in einem Leergutautomaten erleichtert werden und eine Reinigung in einer Waschablage vereinfacht werden.

Ferner kann es zweckmäßig sein, wenn der Masseschwerpunkt des Mehrweg-Kunststoffbehälters entlang seiner Behälterhöhe gesehen in einer dem verschlossenen Ende zugwandten Hälfte der Behälterhöhe liegt, insbesondere in einem dem verschlossenen Ende zugewandten Drittel der Behälterhöhe, liegt. Damit ist mit anderen Worten gemeint, dass der Masseschwerpunkt des Behälters weniger weit vom Behälterboden distanziert ist als vom oberen offenen Ende des Behälters. Dies im Gegensatz zu bekannten becherförmigen Behältern, bei welchen der Masseschwerpunkt zum oberen offenen Behälter nähergelegen ist als dem Behälterboden. Mit dem Begriff Behälterhöhe ist die maximale axiale Längserstreckung des Behälters gemeint. Bevorzugt liegt der Masseschwerpunkt des Behälters innerhalb des durch den Behältermantel umfassten Bereichs bzw. Volumens.

Dies bringt den Vorteil mit sich, dass ein solcher Behälter, wenn er in einem Leergutautomaten für Mehrwegbehälter oder in einer Waschanlage transportiert wird, und dabei seitlich liegt, also nicht auf seinem Boden steht, sondern entlang seiner Mantelfläche geführt wird, nicht oder nur wenig bzw. vergleichsweise wenig zu Rollbewegungen neigt. So kann generell eine gute Transportierbarkeit bzw. Förderbarkeit ermöglicht werden, und im speziellen auch eine Detektion / Formerkennung in einem Leergutautomaten erleichtert werden und eine Reinigung in einer Waschanlage vereinfacht werden.

Darüber hinaus kann vorgesehen sein, dass der Boden kreisförmig ist und entlang seines Durchmessers unterschiedliche Bodendicken aufweist, welche Bodendicke zwischen 0,5 mm und 4,0 mm beträgt. Bei Betrachtung des Bodens im Axialschnitt kann der Boden dabei einen vom Bodenmittelpunkt hin zum Bodenaußendurchmesser kontinuierlich bzw. graduell zunehmenden Bodendickenverlauf aufweisen. Es ist aber beispielsweise auch denkbar, dass der Boden partielle Verdickungen aufweist. So kann beispielsweise der Übergangsbereich vom Boden in den Behältermantel mit einer Verdickung ausgebildet sein, etwa als verdickte Hohlkehle.

Bevorzugt weist die Bodendicke dieselbe Stärke auf, wie dir Wandstärke. Es kann auch vorteilhaft sein, wenn die Bodendicke stärker oder zumindest geringfügig stärker ist als die Wandstärke. Bevorzugt beträgt die Bodendicke des Bodens von 1,0 mm bis 2,5 mm. Besonders bevorzugt ist eine Bodendicke von 1,3 mm bis 2,0 mm, wobei sich insbesondere eine Bodendicke von 1,5 mm als vorteilhaft herausgestellt hat.

Dies bringt den Vorteil mit sich, dass ein solcher Behälter, wenn er in einem Leergutautomaten für Mehrwegbehälter oder in einer Waschanlage transportiert wird, und dabei seitlich liegt, also nicht auf seinem Boden steht, sondern entlang seiner Mantelfläche geführt wird, nicht oder nur wenig bzw. vergleichsweise wenig zu Rollbewegungen neigt. So kann generell eine gute Transportierbarkeit bzw. Förderbarkeit ermöglicht werden, und im speziellen auch eine Detektion / Formerkennung in einem Leergutautomaten erleichtert werden und eine Reinigung in einer Waschablage vereinfacht werden.

Des Weiteren kann vorgesehen sein, dass die Wandstärke des Behältermantels verschieden ist. Beispielsweise kann eine Hälfte des Behältermantels, im Axialschnitt betrachtet, mit einer größeren Wandstärke ausgebildet sein. Es kann auch sein, dass der Behältermantel eine homogene Wandstärke aufweist und dass im Behältermantel eine oder mehrere partielle Verdickungen mit größeren Wandstärken ausgebildet sind.

Dies bringt den Vorteil mit sich, dass ein solcher Behälter, wenn er in einem Leergutautomaten für Mehrwegbehälter oder in einer Waschanlage transportiert wird, und dabei seitlich liegt, also nicht auf seinem Boden steht, sondern entlang seiner Mantelfläche geführt wird, nicht oder nur wenig bzw. vergleichsweise wenig zu Rollbewegungen neigt. So kann generell eine gute Transportierbarkeit bzw. Förderbarkeit ermöglicht werden, und im speziellen auch eine Detektion / Formerkennung in einem Leergutautomaten erleichtert werden und eine Reinigung in einer Waschablage vereinfacht werden.

Gemäß einer besonderen Ausprägung ist es möglich, dass auf oder in den Boden und/oder auf oder in den Behältermantel ein detektierbares Element aufgebracht oder eingebracht ist.

Der Fachwelt ist eine Vielzahl an detektierbaren Elementen bekannt. Es liegt im Ermessen des Fachmanns, eines oder mehrere dieser bekannten Elemente auszuwählen, je nachdem, mit welchem Detektor oder auch in welchem Prozess die Detektion erforderlich ist bzw. erfolgen soll. Durch das Vorsehen eines detektierbaren Elements kann eine Detektion in einem Leergutautomaten erleichtert werden, dies beispielsweise zur Berechnung eines etwaigen Pfandwertes. Es ist auch denkbar, dass das detektierbare Element in einer Wideraufbereitungsanlage zur Erkennung der Behältertype und auch Vereinfachung der Lagerlogistik dient. Bei einem detektierbaren Element kann es sich um ein Element mit einer magnetisch lesbaren Codierung handeln. Es ist auch denkbar, dass es sich bei dem detektierbaren Element um einen NFC-Chip, einen RFID-Chip oder ein Etikett umfassend einen NFC-Chip oder RFID-Chip handeln. Es ist auch denkbar, dass das detektierbare Element ein Watermark, ein Barcode oder ein QR-Code ist. Es versteht sich von selbst, dass diese genannten Varianten keineswegs abschließend zu verstehen sind, und dass eine Vielzahl weiterer detektierbarer Elemente denkbar ist. Je nach Art des detektierbaren Elements kann dieses in das Material eingebracht sein, oder auch direkt auf die Überfläche aufgebracht, beispielsweise aufgeklebt sein. Es kann auch zweckmäßig sein, wenn das detektierbare Element für einen Betrachter nicht sichtbar bzw. nicht erkennbar ist. Wenn das detektierbare Element eine ausreichend große Masse aufweist, kann mittels des detektierbaren Element auch erreicht werden, dass ein Masseschwerpunkt des Behälters außerhalb der Längsachse liegt.

Entsprechend einer vorteilhaften Weiterbildung kann vorgesehen sein, dass auf der Siegelfläche des Siegelrandes ein Siegelhilfsmittel aufgebracht ist, bevorzugt ein bevorzugt ein rückstandsfrei entfernbares Siegelhilfsmittel aufgebracht ist.

Bei dem Siegelhilfsmittel kann es sich beispielsweise um einen Heißsiegellack handeln. Das Siegelhilfsmittel kann dabei partiell oder vollflächig auf die Siegelfläche aufgetragen sein. Dies bringt den Vorteil mit sich, dass eine Wiederaufbereitung erleichtert wird und damit eine Wiederverwendung vergleichsweise kostengünstig und energieeffizient ermöglicht wird. Dabei ist es denkbar, dass nach dem rückstandsfreien Entfernen des Siegelhilfsmittels ein weiteres Siegelhilfsmittel auf den Siegelrand aufgebracht wird. Es ist denkbar, dass das Siegelhilfsmittel so beschaffen ist, dass es sich derart mit einer Siegelfolie verbindet, dass es beim Abziehen der Siegelfolie vom Siegelrand gemeinsam mit diesem abgezogen wird, sodass kein oder nur wenig Rückstand des Siegelhilfsmittels auf dem Siegelrand verbleibt. Es ist auch denkbar, dass das Siegelhilfsmittel so beschaffen ist, dass es in einem Waschprozess mit oder auch ohne den Einsatz von Siegelhilfsmittel-lösenden Chemikalien oder Hilfsstoffen entfernbar ist.

Insbesondere kann es vorteilhaft sein, wenn das offene Ende ein Gewinde, insbesondere ein Außengewinde, aufweist, welches Gewinde mit einem weiteren Gewinde, insbesondere mit einem Innengewinde, eines als Schraubverschluss ausgebildeten Verschlusselements verbindbar ist. Es ist natürlich auch denkbar, dass das offene Ende mit einem Innengewinde ausgebildet ist, welches mit einem Schraubverschluss umfassend ein komplementäres Außengewinde verbindbar ist. Alternativ oder zusätzlich zu einem Gewinde kann das offene Ende mit einem Bajonettverschlussmechanismus ausgebildet sein.

Dies bringt den Vorteil mit sich, dass eine Siegelfolie, wenn ein zusätzliches Verschlusselement vorgesehen ist, vergleichsweise dünn ausgeführt sein kann, respektive vergleichsweise wenig durchstichfest und wenig querdruckstabil ausgebildet sein muss. Zudem kann ein etwaiges auf die Siegelfläche aufgebrachtes Siegelhilfsmittel vergleichsweise schwach haftend und damit besonders gut rückstandsfrei entfernbar ausgebildet sein. Insbesondere kann mittels eines zusätzlichen Schraubverschlusses auch eine Wiederverschließbarkeit für einen Benutzer ermöglicht sein, welche zudem auch einen guten Auslaufschutz im Falle eines liegenden Transportes bieten kann. Ein Schraubverschluss kann zudem wie an sich bekannt mit einem Ring ausgebildet sein, welcher Ring sich bei einem erstmaligen Öffnen vom Schraubdeckel löst und damit einem Benutzer als Originalitätsnachweis dient.

Ferner kann vorgesehen sein, dass das offene Ende einen Schlagrand aufweist, welcher Schlagrand mit einem als Schlagdeckel ausgebildeten Verschlusselement verbindbar ist. Vorteilhafterweise sind Schlagrand und Schlagdeckel zueinander formkomplementär, sodass eine im Wesentlichen formschlüssige Verbindung realisiert ist.

Dies bringt den Vorteil mit sich, dass eine Siegelfolie, wenn ein zusätzliches Verschlusselement vorgesehen ist, vergleichsweise dünn ausgeführt sein kann, respektive vergleichsweise wenig durchstichfest und wenig querdruckstabil ausgebildet sein muss. Zudem kann ein etwaiges auf die Siegelfläche aufgebrachtes Siegelhilfsmittel vergleichsweise schwach haftend und damit besonders gut rückstandsfrei entfernbar ausgebildet sein. Insbesondere kann mittels eines zusätzlichen Schlagdeckels oder Prelldeckels auch eine Wiederverschließbarkeit für einen Benutzer ermöglicht sein, welche zudem auch einen guten Auslaufschutz im Falle eines liegenden Transportes bieten kann. Ein Schlagdeckel kann zudem wie an sich bekannt mit einem Durchbruch, einer Lasche oder einem Hinterschnitt ausgebildet sein, welcher Durchbruch, welche Lasche oder welcher Hinterschnitt vor einem erstmaligen Öffnen eingedrückt oder abgebrochen werden kann und damit einem Benutzer als Originalitätsnachweis dient. Um eine Wiederverwendbarkeit des Behälters zu ermöglichen, kann es hier zweckmäßig sein, wenn ein solcher Durchbruch am Deckel, und nicht am Schlagrand des Behälters vorgesehen ist.

Ganz generell kann der Behälter, insbesondere wenn zusätzlich zum Siegelelement ein weiteres Verschlusselement vorgesehen ist, mit einem Originalitätsnachweis-Mittel ausgebildet sein. Dabei kann es sich wie bereits beschrieben um einen Ring handeln, welcher mittels Sollbruchstellen bzw. Schwächungen mit dem Verschlusselement verbunden ist. Es ist auch denkbar, dass ein Ring als Abziehring oder Abziehband ausgebildet ist, welchem neben einem Nachweis der Originalität auch noch eine zusätzliche dichtende oder versiegelnde Funktion zukommen kann. Dies kann insbesondere eine Haltbarkeit eines in dem Behälter umfassten Füllgutes positiv beeinflussen.

Darüber hinaus kann vorgesehen sein, dass der Siegelrand derart ausgebildet ist, dass der Siegelrand mit Rastelementen eines als Mehrweg-Kunststoffdeckel ausgebildeten Verschlusselements in Eingriff bringbar ist.

Dies bringt den Vorteil mit sich, dass eine Haltbarkeit eines in dem Behälter enthaltenen Füllgutes, beispielsweise eines Molkereierzeugnisses oder eines Schüttguts, verbessert bzw. verlängert werden kann. Dadurch wird eine Verschwendung reduziert und damit die Nachhaltigkeit verbessert.

Vorteilhaft ist auch eine Ausprägung, gemäß welcher vorgesehen sein kann, dass der Mehrweg-Kunststoffbehälter als Kombi-Verpackungsbehälter ausgebildet ist und ein Außenteil umfasst, welches Außenteil den Mehrweg-Kunststoffbehälter ummantelt, wobei das Außenteil aus einem Zuschnitt gebildet ist, welcher Zuschnitt eine im Wesentlichen kreisringsegmentförmige Grundform aufweist, welcher Zuschnitt einen ersten Endabschnitt und einen zweiten Endabschnitt aufweist, wobei der Zuschnitt zu einem Mantel gewickelt ist und dabei der erste Endabschnitt und der zweite Endabschnitt in einem Überlappungsbereich miteinander gekoppelt sind, wobei das Außenteil weiters eine erste Stirnseite und eine zweite Stirnseite aufweist und die erste Stirnseite und die zweite Stirnseite voneinander beabstandet sind, wobei das Außenteil eine Längserstreckung in einer Richtung ausgehend von der ersten Stirnseite zur zweiten Stirnseite aufweist.

Gemäß einer Weiterbildung ist es möglich, dass der Mantel des Außenteils einen Aufnahmebereich und einen Bereich aufweist, welcher Bereich in Längserstreckung betrachtet zwischen dem Aufnahmebereich und der zweiten Stirnseite angeordnet ist, und dass ein Bereich des offenen Endes in dem Aufnahmebereich des Mantels des Außenteils aufgenommen ist. Bei dem Bereich, der in dem Aufnahmebereich des Mantels aufgenommen ist kann es sich um den Siegelrand bzw. um einen Teil des Siegelrandes handeln.

Dies bringt den Vorteil mit sich, dass durch den Aufnahmebereich und den Bereich, welcher in Längserstreckung betrachtet zwischen dem Aufnahmebereich und der zweiten Stirnseite angeordnet ist, erreicht werden kann, dass der Zuschnitt und ein mit dem Zuschnitt umwickelter becherförmiger Behälter voneinander getrennt werden müssen, um einen Zugriff zu einem in dem Behälter umfassten Füllgut zu ermöglichen. Dadurch kann eine verbesserte Trennung und ein verbessertes Recycling gewährleistet werden. Zudem kann der Zuschnitt eine hochwertige und ansprechende Umverpackung eines Behälters bilden, wobei der Zuschnitt zudem eine Funktion als Originalitätsnachweis erfüllen kann und damit als "tamper evident" gilt.

Alternativ oder zusätzlich ist es auch möglich, dass der Behälter mittels eines Außenteils ummantelt ist, so wie dieses beispielsweise durch die WO 2020/245148 A1 der gleichnamigen Anmelderin bekannt geworden ist.

Außenteile der beschriebenen Arten können dazu dienen, die Stabilität des Behälters zu verbessern, das Füllgut vor einem Lichteintrag und einer thermischen Einwirkung zu schützen und damit die Haltbarkeit eines im Behälter umfassten Füllgutes zu verbessern. Darüber hinaus können optisch ansprechende Designs, sowie erforderliche Produktkennzeichnungen einfach und zuverlässig angebracht werden. Durch den Einsatz von den Behältern ummantelnden Außenteilen können die Behälter selbst neutral, also ohne Produktkennzeichnungen hergestellt werden und sind damit in einem Wiederverwendungsprozess besonders flexibel wiedereinsetzbar. So können beispielsweise verschiedene Abfüllbetriebe bzw. verschiedene Molkereien denselben Behälter wiederverwenden und mit individuellen Verpackungsdesigns versehen.

Gemäß einer vorteilhaften Weiterbildung kann vorgesehen sein, dass der Behälter im Bereich seines Bodens ein Ausrichtungsmittel, insbesondere eine Rille oder eine Erhebung, aufweist, welche zur Fixierung und/oder zur Positionierung des Behälters ausgebildet ist. Das im Boden, insbesondere an der Unterseite des Bodens ausgebildete Ausrichtungsmittel kann als Vorsprung oder als Rücksprung ausgebildet sein. Durch Koppelung eines Koppelungsmittels einer Vorrichtung zum Anbringen des Außenteils am Behälter mit diesem Ausrichtungsmittel im Behälterboden kann dieser fixiert werden und auch ausgerichtet werden. Dies kann ein Anbringen des Außenteils sowohl im Falle eines Umwickelns, als auch im Falle eines axialen Aufschiebens erleichtern. Das Ausrichtungsmittel kann beispielsweise auch als Verzahnung im Behälterboden ausgebildet sein. Ein Werkzeug bzw. ein Koppelungsmittel einer Vorrichtung kann in das Ausrichtungsmittel eingreifen, beispielsweise durch Verzahnung, Spreizwirkung, sowie Vakuum bzw. Unterdruck. Ein Ausrichtungsmittel kann weiters zur exakten Positionierung, respektive Ausrichtung des Behälters im Zuge einer Sammlung, Sortierung, Reinigung, Wiederbefüllung, usw. dienen.

Der Siegelrand kann dabei wie an sich bekannt und gebräuchlich kreisrund sein und sich bei Betrachtung des Behälters in axialer Richtung konstant über den Mantel nach außen erstrecken. Es kann aber auch sein, dass das offene Ende einen über den Behältermantel des Behälters bereichsweise auskragenden Siegelrand aufweist. Damit ist gemeint, dass der Siegelrand beispielsweise mit Fortsätzen oder Schnäbeln ausgebildet ist, welche sich in radialer Richtung zur Kegelachse, also bei Betrachtung des Behälters 90° zur Kegelachse, über den Behältermantel des Behälters erstrecken. Diese Fortsätze oder Schnäbel können als Bereich Siegelrandes in einem Aufnahmebereich des Mantels eines Außenteils aufgenommen sein. Ein über den Behältermantel des Behälters bereichsweise auskragender Siegelrand kann beispielsweise auch durch einen elliptischen Siegelrand realisiert sein, welcher sich in radialer Richtung zur Kegelachse, also bei Betrachtung des Behälters 90° zur Kegelachse, an beispielsweise zwei gegenüberliegenden Positionen über den Behältermantel des Behälters erstreckt. Ein solcher elliptischer Siegelrand kann in einem Aufnahmebereich des Mantels eines Außenteils aufgenommen sein.

Erfindungsgemäß ist auch ein Verfahren zur Wiederaufbereitung eines becherförmigen Mehrweg-Kunststoffbehälters vorgesehen. Das Verfahren umfasst die Verfahrensschritte:
- Bereitstellen eines becherförmigen Behälters, welcher Mehrweg-Kunststoffbehälter einen Behältermantel umfasst, welcher Behältermantel ein offenes Ende und ein mit einem Boden verschlossenes Ende aufweist, wobei sich eine Längsachse des Mehrweg-Kunststoffbehälters zwischen dem offenen Ende und dem verschlossenen Ende erstreckt, und wobei das offene Ende einen Siegelrand mit einer Siegelfläche aufweist, von welcher Siegelfläche eine erste Siegelfolie entfernt ist,
- erste Reinigung des Mehrweg-Kunststoffbehälters zur Entfernung von Füllrückständen,
- Bearbeiten der Siegelfläche des Siegelrandes zur Wiederherstellung der Verbindbarkeit der Siegelfläche des Siegelrandes mit einer Siegelfolie,
- Wiederbefüllen des Mehrweg-Kunststoffbehälters mit einem Füllgut,
- Wiederverbinden der Siegelfläche des Siegelrandes mit einer weiteren Siegelfolie.

Mit dem Begriff Füllrückstände sind jegliche Rückstände gemeint, welche in oder auf dem Behälter vorhanden sein können. Dies umfasst sowohl Rückstände des ursprünglich enthaltenen Füllgutes, wie etwa eines Molkereiproduktes oder jegliche sonstige Lebensmittelrückstände, als auch etwaige Verschmutzungen, welche beispielsweise im Zuge eine Leergutsammlung oder eines Transportes entstehen können.

Insbesondere ist der beschriebene Prozess dahingehend zu verstehen, dass die Verfahrensschritte in einem industriellen Reinigungs- und Wiederaufbereitungsverfahren bzw. in einer dafür geeigneten Anlage durchgeführt werden. Natürlich ist es auch denkbar, dass eine etwaige Vorreinigung im Vorfeld zur beschriebenen ersten Reinigung, beispielsweise von einem Benutzer zuhause und vor der Leergutrückgabe durch händisches Ausspülen oder Auswaschen des Behälters erfolgen kann. Auch durch dieses Auswaschen kann es zu Füllgutrückständen, genauer gesagt zu Waschmittelrückständen kommen.

Dabei ist es denkbar, dass die erste Reinigung und das Bearbeiten der Siegelfläche in einem gemeinsamen bzw. gleichzeitigen Verfahrensschritt durchgeführt werden. Insbesondere ist es denkbar, dass bereits im Zuge der ersten Reinigung eine Verbindbarkeit bzw. Wiederversiegelbarkeit der Siegelfläche des Siegelrandes wieder hergestellt wird. Dies beispielsweise, weil ein Siegelhilfsmittel auf der Siegelfläche durch einen Waschprozess rückstandsfrei entfernbar ist.

Bei dem Füllgut, welches im Zuge der Wiederbefüllung in den Behälter eingebracht wird, kann es sich sowohl um das ursprüngliche, als auch um ein andersartiges Füllgut handeln.

Bevorzugt kann das Verfahren, und dabei insbesondere der Verfahrensschritt des Wiederverbindens der Siegelfläche mit einer neuen Siegelfolie, mehrfach wiederholt werden, sodass eine Lebensdauer des Behälters und damit eine Nachhaltigkeit weiter erhöht werden kann.

Das Verfahren, sowie die Konstruktion des Behälters ermöglichen eine mehrmalige Wiederverwendung ohne oder zumindest weitgehend ohne Qualitätseinbußen.

Das Wiederverbinden der Siegelfläche mit einer weiteren, also mit einer neuen Siegelfolie kann auch mit einem anderen Versiegelungsverfahren erfolgen, wie das erstmalige Versiegeln mit der ersten Siegelfolie. So ist es beispielsweise denkbar, dass das Versiegeln mit der ersten Siegelfolie durch Heißversiegeln erfolgt, und dass das Versiegeln mit den jeweiligen weiteren Siegelfolien durch Kaltversiegeln erfolgt, oder umgekehrt. Beim Kaltversiegeln können wie an sich bekannt Kleberschichten an der Siegelfolie oder gegebenenfalls auch am Siegelrand zur Versiegelung vorgesehen sein.

Das erfindungsgemäße Verfahren bringt den überraschenden Vorteil mit sich, dass eine Wiederaufbereitung und damit einhergehend eine Wiederverwendung eines Mehrweg-Behälters auf einfache Art und Weise möglich ist.

Darüber hinaus kann vorgesehen sein, dass nach dem Bearbeiten der Siegelfläche des Siegelrandes und vor dem Wiederbefüllen des Mehrweg-Kunststoffbehälters eine zweite Reinigung des Mehrweg-Kunststoffbehälters zur Entfernung von Bearbeitungsrückständen durchgeführt wird.

Dies bringt den Vorteil mit sich, dass eine Wiederversiegelbarkeit des Behälters verbessert werden kann. Darüber hinaus kann auch verhindert werden, dass etwaige Bearbeitungsrückstände, beispielsweise Reinigungsmittelrückstände oder durch abrasive Bearbeitung angefallenes Mikroplastik, mit dem Füllgut in Berührung kommen und dieses kontaminieren. Die zweite Reinigung kann dabei dieselben Reinigungsmethoden und Prozessschritte umfassen, wie die erste Reinigung. Es ist aber auch denkbar, dass für die zweite Reinigung andere Verfahrensschritte zweckmäßig sind. Beispielsweise kann die erste Reinigung im Wesentlichen einen Waschprozess umfassen, und die zweite Reinigung einen thermischen oder einen pneumatischen oder einen chemischen Prozess umfassen. Insbesondere wenn ein bearbeiten der Siegelfläche durch mechanische Bearbeitung, beispielsweise durch Abschleifen oder andere abrasive verfahren erfolgt, kann eine zweite Reinigung mittels Druckluft vorteilhaft sein.

Des Weiteren kann vorgesehen sein, dass vor dem Verbinden der weiteren Siegelfolie mit der Siegelfläche des Siegelrandes auf die Siegelfläche des Siegelrandes ein Siegelhilfsmittel aufgebracht wird.

Dies bringt den Vorteil mit sich, dass eine besonders gute Wiederverbindbarkeit bzw. Wiederversiegelbarkeit erzielbar ist. Beim sogenannten Heißversiegeln können Heißssiegellacke aufgetragen werden, beim sogenannten Kaltversiegeln können Klebstoffe aufgetragen werden. Es ist aber auch denkbar, dass Siegelhilfsmittel auf der Siegelfolie vorgesehen sind, anstatt auf dem Siegelrand.

Gemäß einer besonderen Ausprägung ist es möglich, dass bei der ersten und/oder bei der zweiten Reinigung der Siegelfläche des Siegelrandes ein mechanischer, chemischer und/oder ein thermischer Reinigungsschritt durchgeführt wird. Alternativ oder zusätzlich ist es auch denkbar, dass beim Bearbeiten der Siegelfläche des Siegelrandes zur Wiederherstellung der Verbindbarkeit ein mechanischer, chemischer und/oder ein thermischer Bearbeitungsschritt durchgeführt wird.

Dies bringt den Vorteil mit sich, dass ein verwendeter Behälter zuverlässig wieder in seinen Ursprungs- oder Neuzustand oder zumindest weitgehend in seinen Ursprungs- oder Neuzustand verbracht werden kann, sodass eine Wiederverwendung erleichtert wird.

Entsprechend einer vorteilhaften Weiterbildung kann vorgesehen sein, dass bei der ersten und/oder bei der zweiten Reinigung der Siegelfläche des Siegelrandes eine Plasmabehandlung durchgeführt wird.

Dies bringt den Vorteil mit sich, dass verwendeter Behälter zuverlässig wieder in seinen Ursprungs- oder Neuzustand oder zumindest weitgehend in seinen Ursprungs- oder Neuzustand verbracht werden kann, sodass eine Wiederverwendung erleichtert wird.

Es kann auch sein, dass bei der ersten und/oder bei der zweiten Reinigung eine Laserbehandlung oder eine energetische Behandlung, beispielsweise eine Strahlenanwendungen, etwa mit ionisierter Strahlung durchgeführt wird.

Insbesondere kann es vorteilhaft sein, wenn die Siegelfläche des Siegelrandes mit der weiteren Siegelfolie durch Ultraschallschweißen wiederverbunden wird.

Natürlich ist es auch denkbar, dass ebenso die erste bzw. ursprüngliche Siegelfolie durch Ultraschalschweißen auf die Siegelfläche aufgebracht wurde. Dies bringt den Vorteil mit sich, dass eine zuverlässiges Verschließen des Behälters durchgeführt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: einen Mehrweg-Kunststoffbehälter in dreidimensionaler Darstellung,
- Fig. 2: einen Mehrweg-Kunststoffbehälter mit Vertiefungen in dreidimensionaler Darstellung,
- Fig. 3: einen weiteren Mehrweg-Kunststoffbehälter mit Vertiefungen in dreidimensionaler Darstellung,
- Fig. 4: den Mehrweg-Kunststoffbehälter auf Fig. 1 in Ansicht, geschnitten,
- Fig. 5: einen Kombi-Verpackungsbehälter in dreidimensionaler Darstellung,
- Fig. 6: einen Mehrweg-Kunststoffbehälter mit Gewinde in dreidimensionaler Darstellung,
- Fig. 7: einen Mehrweg-Kunststoffbehälter mit Mehrweg-Kunststoffdeckel in dreidimensionaler Darstellung,
- Fig. 8: einen Mehrweg-Kunststoffbehälter mit einem elliptischen Siegelrand in dreidimensionaler Darstellung,
- Fig. 9: ein Ausführungsbeispiel eines Behälterbodens in Ansicht, geschnitten,
- Fig. 10: ein weiteres Ausführungsbeispiel eines Behälterbodens in Unteransicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

Als weiterer Begriff kann auch noch "wahlweise" verwendet werden. Darunter wird verstanden, dass dieser Verfahrensschritt oder diese Anlagenkomponente grundsätzlich vorhanden ist, jedoch je nach Einsatzbedingungen eingesetzt werden kann, dies jedoch nicht zwingend erfolgen muss.

Die Figuren werden nachfolgend weitgehend in einer Zusammenschau beschrieben, um unnötige Wiederholungen zu vermeiden. Auf Besonderheiten und Unterschiede zwischen den Figuren und Ausführungsbeispielen wird dabei näher eingegangen.

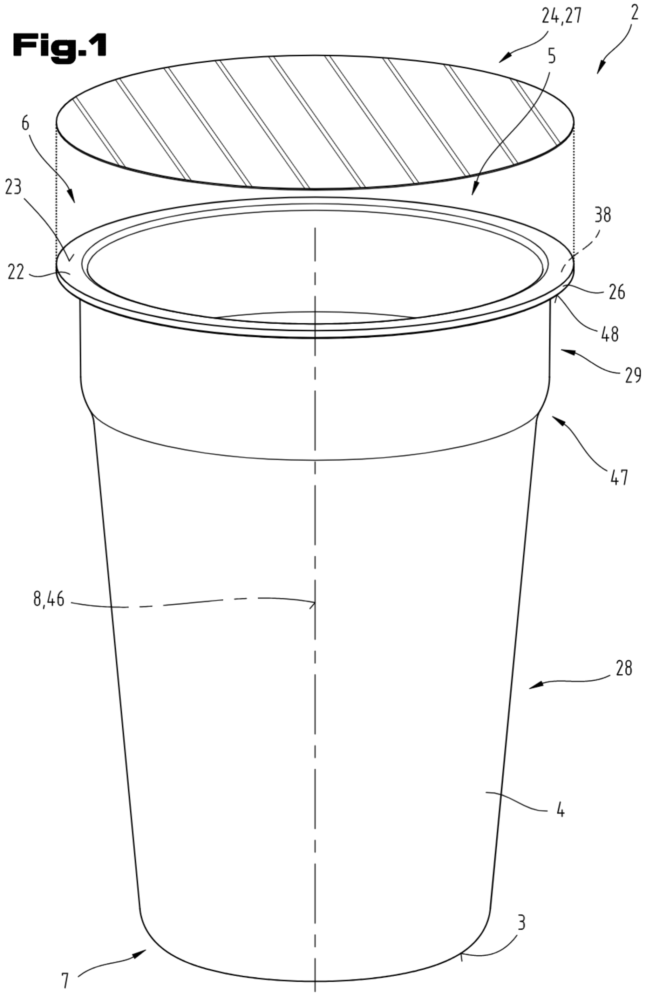

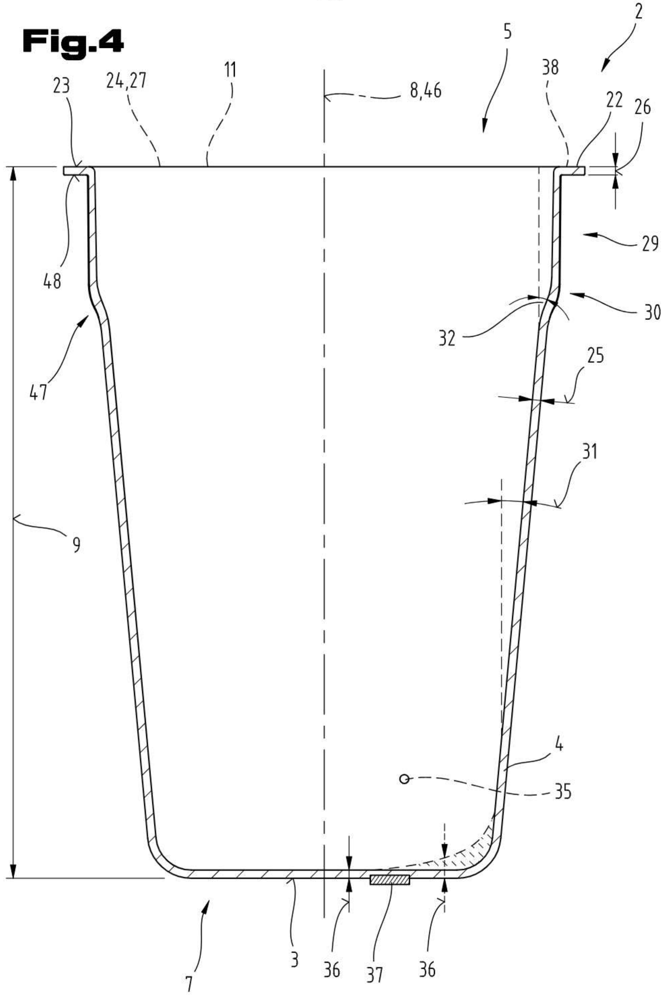

In der Fig. 1 ist ein Ausführungsbeispiel eines Mehrweg-Kunststoffbehälters 2 bespielhaft für eine Vielzahl an möglichen unterschiedlichen Formgebungen gezeigt, wobei die Mehrweg-Kunststoffbehälter 2 becher- oder schalenförmig ausgebildet sind, sodass diese ein Füllgut aufnehmen können. Der in der Fig. 1 dargestellte Mehrweg-Kunststoffbehälter 2 ist in der Fig. 4 erneut gezeigt, jedoch in Ansicht und durch die Längsachse 8 geschnitten, also im Axialschnitt, dargestellt. Der Mehrweg-Kunststoffbehälter 2 umfasst ein lebensmittelechtes Kunststoffmaterial. Bevorzugt umfasst der Mehrweg-Kunststoffbehälter 2 ein recyceltes lebensmittelechtes Kunststoffmaterial. Der Mehrweg-Kunststoffbehälter 2 umfasst einen Boden 3 sowie einem Behältermantel 4. Der Behälter 2 weist weiters an seiner vom Boden 3 abgewendeten Seite ein offenes Ende 5 auf. Weiters kann im Bereich seines offenen Endes 5 ein den Behältermantel 4 nach außen überragender Flansch 6 vorgesehen sein. Der Boden 3 bildet für den Behältermantel 4 ein verschlossenes Ende 7 aus. Der Behälter 2 hat eine im Wesentlichen kegelförmige bzw. kegelstumpfförmige Grundform. Das offene Ende 5 weist einen Siegelrand 22 mit einer Siegelfläche 23 auf, welche Siegelfläche 23 derart ausgebildet ist, dass die Siegelfläche 23 mit einer ersten Siegelfolie 24 verbindbar ist. Der Flansch 6 kann dazu als Siegelflansch ausgebildet sein. Die Siegelfolie 24, 27 ist in der Fig. 1 noch vor dem Verbinden mit der Siegelfläche 23, also quasi in einer Explosionsansicht, dargestellt. In der Fig. 4 ist die Siegelfolie 24, 27 mit der Siegelfläche 23 verbunden, respektive versiegelt und verdeckt das offene Ende 5 vollständig, sodass der Mehrweg-Kunststoffbehälter 2 verschlossen ist. Bekanntlich können Siegelfolien 24 eine Lasche oder einen Fortsatz aufweisen, mittels welchem einem Benutzer ein Abziehen der Siegelfolie 24, 27 vom Siegelrand 22 erleichtert ist. Der Einfachheit wegen ist eine solche Lasche nicht dargestellt.

Der Behälter 2 wird bevorzugt durch einen in einem Tiefziehvorgang hergestellten Bauteil gebildet, welcher rasch und vor allem in kurzer Zykluszeit herstellbar ist. Der Vorgang des Tiefziehens ist hinlänglich bekannt und wird deshalb nicht näher darauf eingegangen. Der Tiefziehvorgang eignet sich besonders dazu, um aus einer umzuformenden Schicht aus einem umformbaren Werkstoff mittels eines Tiefziehwerkzeuges den Behälter 2 mit einer doch ausreichenden Wandstärke herzustellen, welche die Dichtheit während der Lagerung, Benutzung bis hin zur Entsorgung gewährleistet.Der Behälter 2 kann aber auch mittels anderer Herstellverfahren ausgeformt werden, wie z.B. mittels eines Spritzgussvorganges.

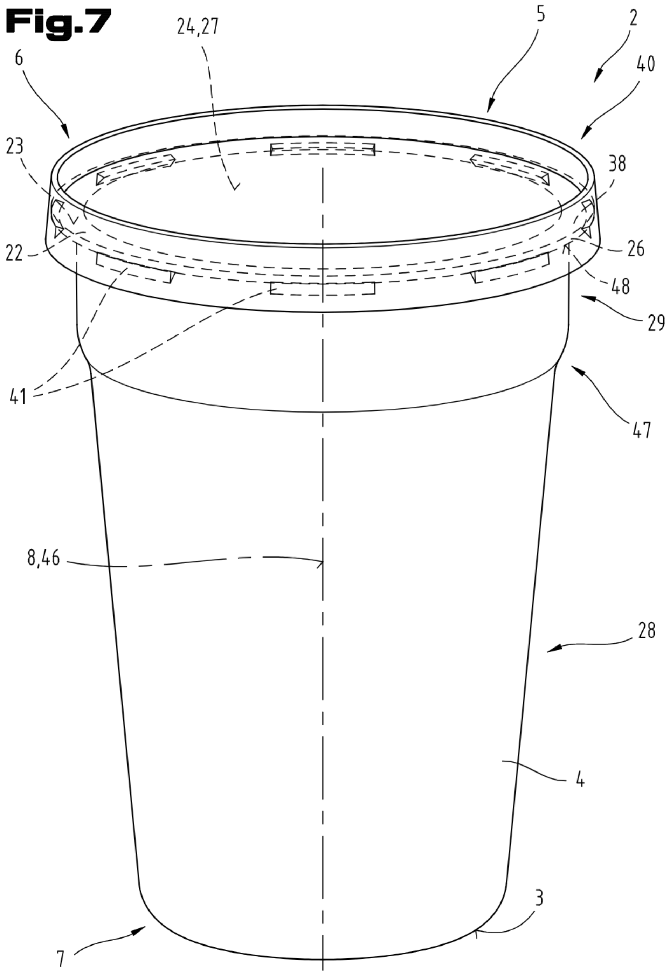

Durch die becher- bzw. schalenförmige Ausbildung des Behälter 2 erstreckt sich in Axialrichtung zwischen dem offenen Ende 5 und dem mit dem Boden 3 verschlossenen Ende 7 eine Längsachse 8, welche bei symmetrischer Ausbildung auch eine Mittelachse darstellen kann. Im Bereich des Flansches 6 oder im Bereich des Siegelrandes 22 ist es möglich, zusätzlich zu einer Siegelfolie 24, 27 ein weiteres Verschlusselement 11 beispielsweise einen Schraubverschluss, einen Schlagdeckel oder einen Mehrweg-Kunststoffdeckel 40 (beispielhaft in der Fig. 7 dargestellt) anzuordnen bzw. damit zu verbinden.

In Axialrichtung und somit in Richtung der Längsachse 8 weist der Behälter 2 zwischen seinem offenen Ende 5, insbesondere dem Flansch 6 oder dem Siegelrand 22, und dem Boden 3 eine Behälterhöhe 9 auf, wodurch in Abhängigkeit von den Querschnittsabmessungen das Aufnahmevolumen des Behälters 2 zur Aufnahme eines Füllguts festgelegt wird. Durch die Behälterhöhe 9 in Verbindung mit den Querschnittsabmessungen wird somit ein Aufnahmeraum des Behälters 2 definiert.

Als Behältermantel 4 wird jener Abschnitt des Behälters 2 verstanden, welcher sich zwischen dem offenen Ende 5, insbesondere dem Flansch 6, und dem Boden 3 in überwiegend axialer Richtung erstreckt. Bevorzugt wird der Behälter 2 mit seinem Behältermantel 4 derart ausgebildet, dass sich dieser ausgehend vom offenen Ende 5 hin zum Boden 3 bevorzugt konisch verjüngt, also im Wesentlichen kegelstumpfförmig ist. Bei dieser Ausbildung entspricht die Längsachse 8 der Kegelachse 46.

Besonders in der Schnittansicht in der Fig. 4 ist gut erkennbar, dass der Behältermantel 4 eine Wandstärke 25 aufweist, welche Wandstärke 25 von 0,5 mm bis 4,0 mm beträgt. Der Siegelrand 22 weist zudem eine Siegelranddicke 26 auf, welche Siegelranddicke 26 sich in axialer Richtung der Längsachse 8 erstreckt, und welche Siegelranddicke 26 von 0,8 mm bis 4,0 mm beträgt. Die Siegelfläche 23 ist dabei derart ausgebildet, dass die Siegelfläche 23 nach einem Entfernen der ersten Siegelfolie 24 von der Siegelfläche 23 des Siegelrandes 22, und nach einer Reinigung des Mehrweg-Kunststoffbehälters 2 mit einer weiteren Siegelfolie 27 verbindbar ist.

In den Fig. 1 und 4 ist weiters gezeigt, dass der Behältermantel 4 einen kegelförmigen Abschnitt 28 aufweisen kann. Dieser kegelförmige Abschnitt 28 erstreckt sich von dem verschlossenen Ende 7 in Richtung zum offenen Ende 5. Zudem ist gezeigt, dass der Behältermantel 4 einen zylinderförmigen Abschnitt 29 aufweisen kann, welcher zylinderförmige Abschnitt 29 sich von dem offenen Ende 5 in Richtung zum verschlossenen Ende 7 erstreckt. Bei Betrachtung des Mehrweg-Kunststoffbehälters 2 in radialer Richtung zur Längsachse 8, also 90° zur Längsachse 8 ist ein Kreisquerschnitt des zylinderförmigen Abschnitts 29 größer, als ein maximaler Kreisquerschnitt des kegelförmigen Abschnitts 28. Der zylinderförmige Abschnitt 29 stellt somit eine ringartige, zylindrische Verbreiterung dar, welche sich an den kegelförmigen Abschnitt 28 anschließt.

Zudem ist in den Fig. 1 und 4 gezeigt, dass in Axialrichtung betrachtet zwischen dem kegelförmigen Abschnitt 28 und dem zylinderförmigen Abschnitt 29 ein kegelförmiger Übergangsabschnitt 30 ausgebildet sein kann, wobei ein erster Winkel 31 zwischen der Längsachse 8 und dem kegelförmigen Abschnitt 28 kleiner ist, als ein zweiter Winkel 32 zwischen der Längsachse 8 und dem kegelförmiger Übergangsabschnitt 30. Dadurch ist eine Verbreiterung des Durchmessers bzw. des Kreisquerschnitts vom kegelförmigen Abschnitt 28 hin zum zylinderförmigen Abschnitt 29 ermöglicht. Der Übergangsabschnitt 30 bildet quasi eine Schulter oder einen den Mantel umlaufenden Anschlagbereich 47 aus, welcher, wenn zwei oder mehrere gleichartig ausgebildete Mehrweg-Kunststoffbehälter 2 in Axialrichtung übereinandergestapelt oder ineinander gesteckt werden, jeweils als Anschlag für einen Flansch 6 oder für einen unteren Bereich oder eine Unterseite 48 des Siegelrandes 22 dienen. Mit der Unterseite 48 des Siegelrandes 22 ist dabei die dem Boden 3 zugewandte Seite bzw. Fläche des Siegelrandes 22 gemeint.

In dem in der Fig. 4 gezeigten Axialschnitt durch einen Mehrweg-Kunststoffbehälter 2 ist zudem eine mögliche Lage eingezeichnet, welche der Masseschwerpunkt 35 des Mehrweg-Kunststoffbehälters 2 einnehmen kann. Konkret ist hier gezeigt, dass der Masseschwerpunkt 35 des Mehrweg-Kunststoffbehälters 2 außerhalb der Längsachse 8, also nicht direkt auf der Längsachse 8 liegen kann. Der Masseschwerpunkt 35 kann entlang seiner Behälterhöhe 9 gesehen in einer dem verschlossenen Ende 7 zugewandten Hälfte oder in einem dem verschlossenen Ende 7 zugewandten Drittel der Behälterhöhe 9 liegen. Im gezeigten Beispiel liegt der Masseschwerpunkt 35 zudem näher am Behältermantel 4, als an der Längsachse 8, ist also weiter von der Längsachse 8 distanziert, als vom Behältermantel 4.

Mittels strichlierter Linien ist eine denkbare Ausbildung des Bodens 3 sowie des Behältermantels 4 im Übergangsbereich zum Boden 3 gezeigt, wobei die Bodendicke 36 radial nach außen gesehen zunimmt. Der Boden 3 ist kreisförmig bzw. weist einen runden Kreisquerschnitt auf. Entlang seines Durchmessers betrachtet weist der Boden 3 unterschiedliche Bodendicken 36 auf, welche Bodendicke 36 zwischen 0,5 mm und 4,0 mm betragen können. Ebenso kann es sein, dass die Wandstärke 25 des Behältermantels 4 verschieden ist. Im gezeigten Beispiel in der Fig. 4 nimmt die Bodendicke 36 radial vom Bodenmittelpunkt nach außen hin zu. Zudem ist die Wandstärke 25 des Behältermantels 4 im Übergangsbereich zum Boden 3 größer bzw. zunehmend. In den Boden 3 ist ein detektierbares Element 37, beispielsweise ein RFID Chip oder ein NFC Chip, aufgebracht oder eingebracht.

Um eine Verbindbarkeit mit einer Siegelfolie 24, 27 zu erleichtern kann auf der Siegelfläche 23 des Siegelrandes 22 ein Siegelhilfsmittel 38 aufgebracht sein, welches bevorzugt rückstandsfrei entfernbar ist. Beispielsweise kann es sich bei einem Siegelhilfsmittel 38 um einen Heißsiegellack oder einen Kleber handeln. Es ist aber auch denkbar, dass das Siegelhilfsmittel 38 auf der Siegelfolie 24, 27 aufgebracht ist und dass das Siegelhilfsmittel 38 erst mit der Siegelfläche 23 des Siegelrandes 22 in Kontakt kommt, wenn die Siegelfolie 24, 27 aufgesiegelt wird.

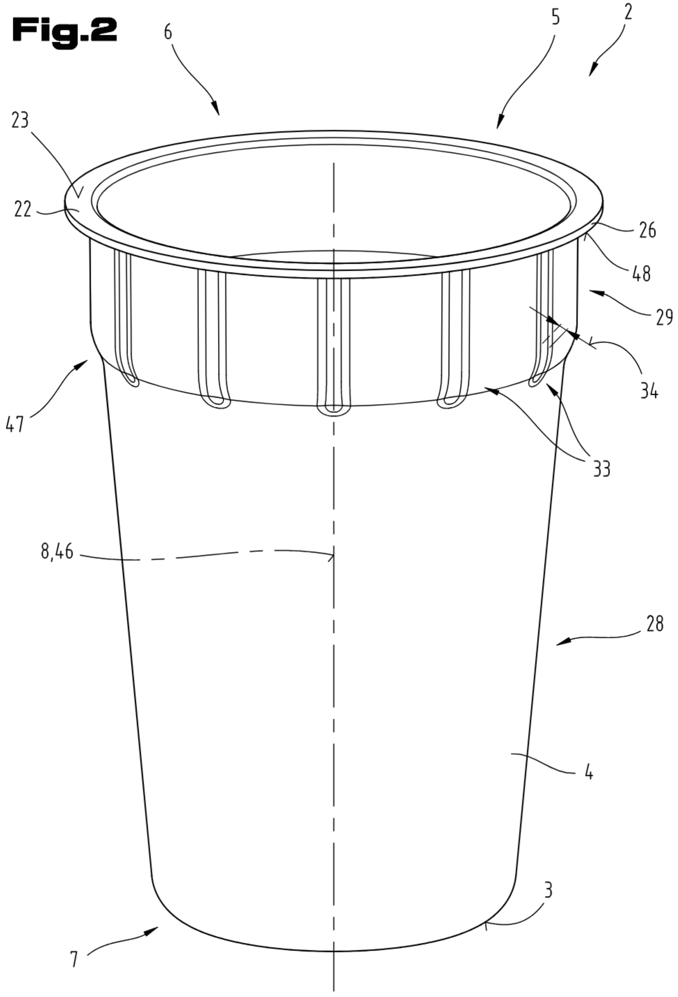

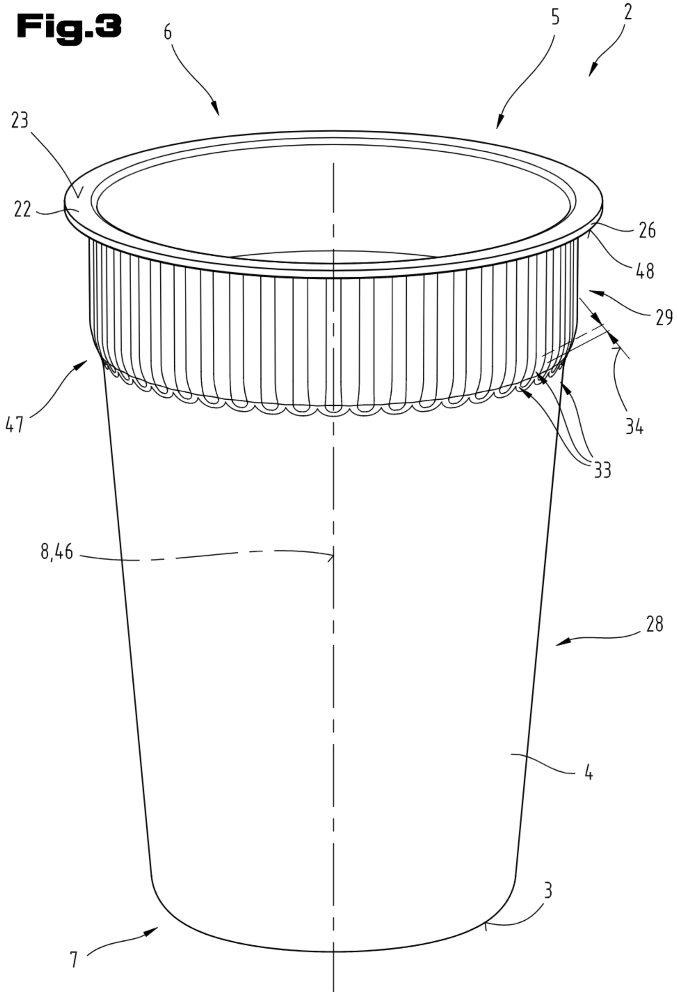

In den Fig. 2 und 3 sind zwei weitere Ausführungsbeispiele von becherförmigen Mehrweg-Kunststoffbehältern 2 gezeigt, jedoch jeweils ohne die Siegelfolie 24, 27, also im geöffneten bzw. unversiegelten Zustand. Im Wesentlichen wird hier auf die Beschreibungsteile in Zusammenhang mit den Fig. 1 und Fig. 4 verwiesen. Zusätzlich zu den bereits beschriebenen Merkmalen weisen die Mehrweg-Kunststoffbehälter 2 in den Fig. 2 und 3 Vertiefungen 33 im Behältermantel 4 auf, welche Vertiefungen 33 sich im Wesentlichen parallel zur Längsachse 8 über den zylinderförmigen Abschnitt 29 erstrecken. Die Vertiefungen 33 weisen in radialer Richtung zur Längsachse 8, also 90° zur Längsachse 8 betrachtet eine Tiefe 34 aufweisen, welche Tiefe 34 von 1% bis 70% der Wandstärke 25 des Behältermantels 4 betragen kann.

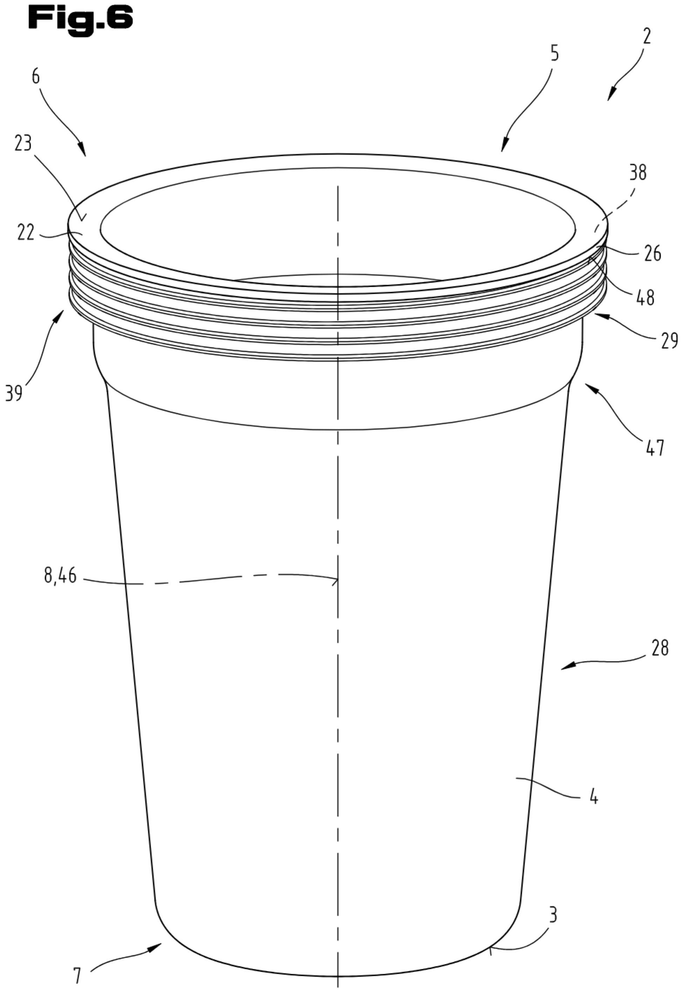

In der Fig. 6 ist ein weiteres Ausführungsbeispiel eines becherförmigen Mehrweg-Kunststoffbehälters 2 gezeigt. Im Wesentlichen wird hier obenstehenden Beschreibungsteile verwiesen. Zusätzlich zu einer Verschließbarkeit mittels einer Siegelfolie 24, 27 ist hier vorgesehen, dass der Mehrweg-Kunststoffbehälter 2 mittels eines weiteren - nicht näher dargestellten - Verschlusselements verschließbar sein kann. Dazu kann das offene Ende 5 ein Gewinde 39, insbesondere ein Außengewinde, aufweisen, welches Gewinde 39 mit einem weiteren Gewinde, insbesondere mit einem Innengewinde, eines als Schraubverschluss ausgebildeten Verschlusselements verbindbar ist. Das in der Fig. 6 gezeigte Gewinde 39 ist lediglich beispielhaft zu verstehen, die genaue Ausbildung des Gewindes 39 obliegt dem Können des Fachmanns. Zweckmäßigerweise ist ein Gewinde 39 jedoch ausreichend stabil ausgeführt, sodass eine mehrmalige Verwendung, mehrmalige Reinigung und mehrmalige Wiederbefüllung des Mehrweg-Kunststoffbehälters 2 möglich ist, ohne eine vorzeitige finale Entsorgung aufgrund eines beschädigten Gewindes 39 zu riskieren.

Alternativ, jedoch nicht figürlich gezeigt ist es auch denkbar, dass das offene Ende 5 einen Schlagrand aufweist, welcher Schlagrand mit einem als Schlagdeckel ausgebildeten Verschlusselement verbindbar ist.

In der Fig. 7 ist eine Variante bzw. Weiterbildung des becherförmigen Mehrweg-Kunststoffbehälters 2 gemäß den Fig. 1 und 4 gezeigt, wobei hier der Siegelrand 22 derart ausgebildet ist, dass der Siegelrand 22 mit Rastelementen 41 eines als Mehrweg-Kunststoffdeckel 40 ausgebildeten Verschlusselements in Eingriff bringbar ist. Dabei ist es denkbar, dass der Kunststoffbehälters 2 wie dargestellt mit der Siegelfolie 24, 27 versiegelt ist und dass der Mehrweg-Kunststoffdeckel 40 zusätzlich aufgebracht ist. Es ist aber auch denkbar, dass der Kunststoffbehälters 2 bereits geöffnet wurde, respektive dass die Siegelfolie 24, 27 abgezogen wurde, und dass der Mehrweg-Kunststoffdeckel 40 somit den Behälter ohne die Siegelfolie 24, 27 verschließt.

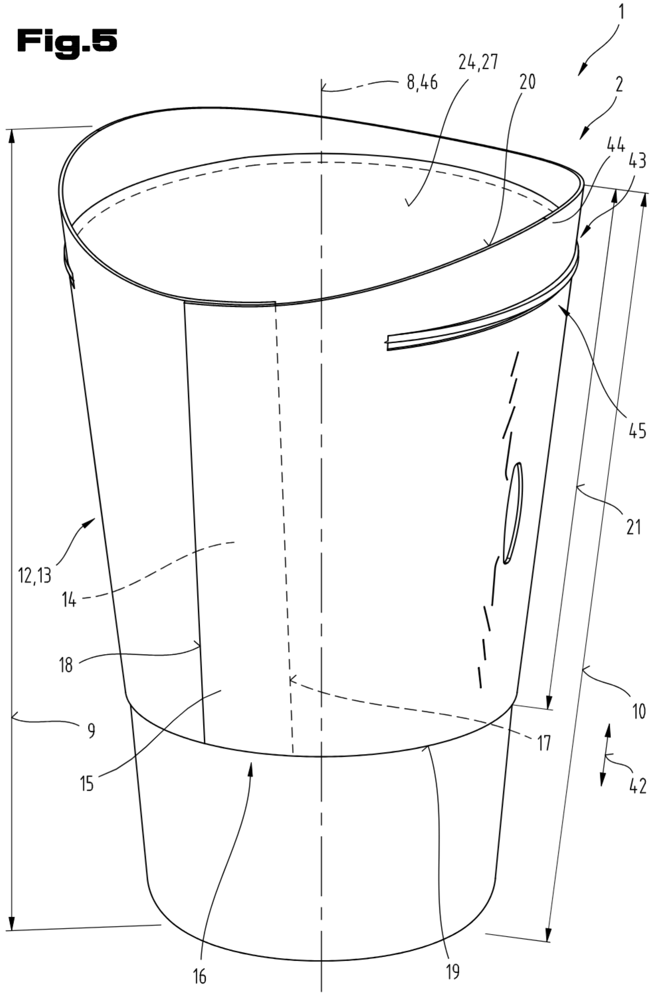

In der Fig. 5 ist eine Variante bzw. Weiterbildung des becherförmigen Mehrweg-Kunststoffbehälters 2 gezeigt, bei welcher der Mehrweg-Kunststoffbehälter 2 als Kombi-Verpackungsbehälter 1 ausgebildet ist. Dazu umfasst der Mehrweg-Kunststoffbehälter 2 ein Außenteil 12, welches Außenteil 12 den Mehrweg-Kunststoffbehälter 2 ummantelt, wobei das Außenteil 12 aus einem zumeist ebenflächigen Zuschnitt 13 gebildet ist, welcher Zuschnitt 13 eine im Wesentlichen kreisringsegmentförmige Grundform aufweist, welcher Zuschnitt 13 einen ersten Endabschnitt 14 und einen zweiten Endabschnitt 15 aufweist, wobei der Zuschnitt 13 zu einem Mantel gewickelt ist und dabei der erste Endabschnitt 14 und der zweite Endabschnitt 15 in einem Überlappungsbereich 16 miteinander gekoppelt sind, wobei das Außenteil 12 weiters eine erste Stirnseite 19 und eine zweite Stirnseite 20 aufweist und die erste Stirnseite 19 und die zweite Stirnseite 20 voneinander beabstandet sind, wobei das Außenteil 12 eine Längserstreckung 42 in einer Richtung ausgehend von der ersten Stirnseite 19 zur zweiten Stirnseite 20 aufweist.

Bei Betrachtung des Kombi-Verpackungsbehälters 1 in der gezeigten dreidimensionalen Ansicht weist der Kombi-Verpackungsbehälter 1 eine Gesamthöhe 10 auf welche sich von dem Boden 3 bis hin zum höchsten Bereich der zweiten Stirnseite 20 des Außenteils 12 erstreckt. Die Gesamthöhe kann somit größer sein, als die Behälterhöhe 9 und auch größer als die Bauhöhe 21 des Außenteils 12.

In der Fig. 5 ist weiters gezeigt, dass der Mantel des Außenteils 12 einen Aufnahmebereich 43 und einen Bereich 44 aufweist, welcher Bereich 44 in Längserstreckung 42 betrachtet zwischen dem Aufnahmebereich 43 und der zweiten Stirnseite 20 angeordnet ist, und dass ein Bereich 45 des offenen Endes 5 in dem Aufnahmebereich 43 des Mantels des Außenteils 12 aufgenommen ist.

Das manschettenförmige Außenteil 12 wird bevorzugt aus einem Zellulose-Werkstoff, wie einem Kartonmaterial, mit einer ausreichenden Festigkeit in Bezug auf die Aufnahme und Übertragung von insbesondere axial wirkenden Druckkräften gebildet und aus einem ebenflächigen Zuschnitt 13 zu einem Mantel gewickelt. Der Zuschnitt 13 wird zumeist in seiner unverformten ebenen Lage bedruckt sowie gegebenenfalls noch mit einer zusätzlichen Beschichtung versehen. Insbesondere ist es natürlich auch denkbar, dass der Zuschnitt 13 mehrteilig ausgebildet ist. Als Werkstoff für den Zuschnitt 13 wird zumeist ein Zellulosematerial verwendet, wobei dies auch ein im Recyclingverfahren hergestellter Karton oder Starkpapier sein kann. Wird eine Schicht bzw. Lage des Außenteils 12 aus einem Recyclingmaterial gebildet, kann auf zumindest einer der Oberflächen eine zusätzliche Schicht aus einem hochwertigeren Papier angeordnet bzw. damit verbunden sein. Diese zusätzliche Schicht dient einer einwandfreien Bedruckung zur Herstellung von Verzierungen, Beschriftungen sowie Produktinformationen.

Das manschettenartige bzw. mantelartige Außenteil 12 führt zu einem zusätzlichen Verstärkung- bzw. Versteifungseffekt des Behälters 2 und somit des gesamten Kombi-Verpackungsbehälters 1. Damit ist zum einen eine hohe Festigkeit und gute Wärmeisolierung und zum anderen ein optimaler Lichtschutz für den Inhalt des Verpackungsbehältnisses gegeben.

Dabei kann insbesondere auch vorgesehen sein, dass der Karton im Bereich der Schnittkanten zusätzlich mit einem wasserabweisenden Material beschichtet oder versiegelt wird. Dies ist besonders dann von Vorteil, wenn die Kombi-Verpackungsbehälter 1 einem erhöhten Feuchtigkeitszutritt ausgesetzt sind. Durch die Beschichtung des für das Außenteil 12 verwendeten Kartons mit einer wasserabweisenden Schicht wird nämlich verhindert, dass es in einer feuchten Umgebung zu einem Aufquellen des Kartons und schließlich zu einem Ablösen vom Behältermantel 4 des Kombi-Verpackungsbehälters 1 kommt.

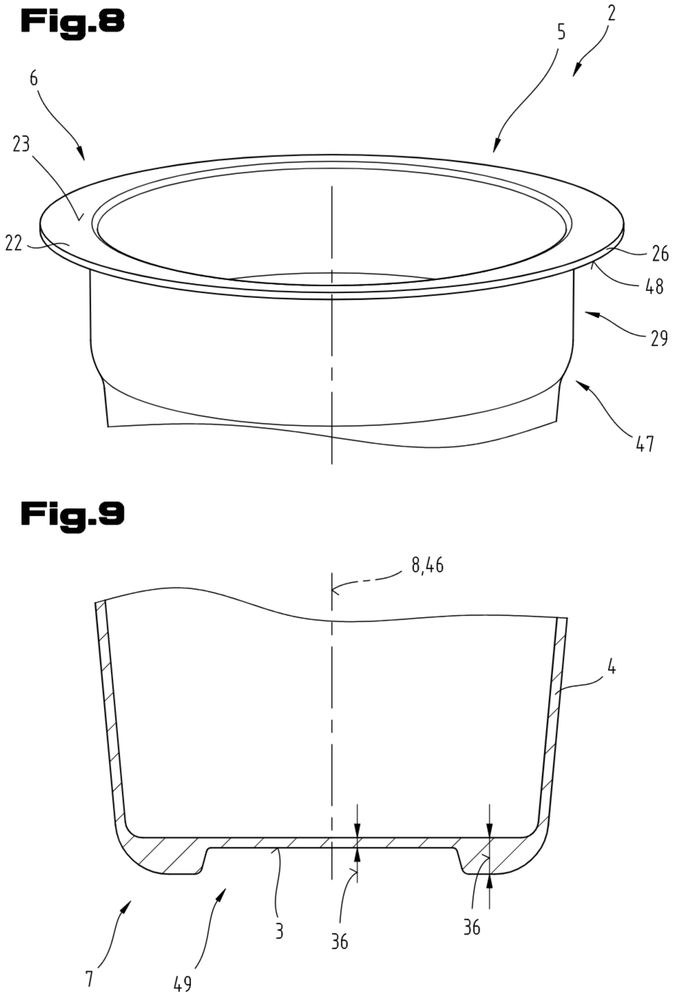

In der Fig. 8 ist ein Mehrweg-Kunststoffbehälter 2 mit einem elliptisch ausgebildeten Siegelrand 22 gezeigt. Alternativ zu der in der Fig. 1 gezeigten kreisrunden Form des Siegelrandes 22, kann es sein, dass das offene Ende 5 einen über den Behältermantel 4 des Behälters 2 bereichsweise auskragenden Siegelrand 22 aufweist. Ein über den Behältermantel 4 des Behälters 2 bereichsweise auskragender Siegelrand 22 durch einen elliptischen Siegelrand 22 realisiert sein, welcher sich in radialer Richtung zur Kegelachse 46, also bei Betrachtung des Behälters 90° zur Kegelachse 46, an beispielsweise zwei gegenüberliegenden Positionen über den Behältermantel 4 erstreckt. Dies insbesondere, wenn der Mehrweg-Kunststoffbehälter 2 mit einem Außenteil 12 zu einem Kombi-Verpackungsbehälter 1 kombiniert wird.

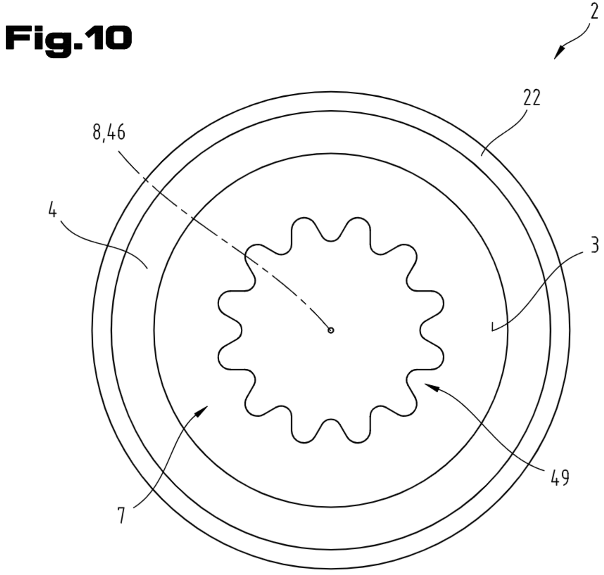

Es kann auch sein, dass der Behälter (2) im Bereich seines Bodens (3) ein Ausrichtungsmittel (49), insbesondere eine Rille oder - nicht dargestellt - eine Erhebung, aufweist, welche zur Fixierung und/oder zur Positionierung des Behälters (2) ausgebildet ist. Eine solche Variante ist beispielhaft und stellvertretend für eine Vielzahl an möglichen Ausführungen anhand der Fig. 9 und 10 gezeigt. Das im Boden 3, insbesondere an der Unterseite des Bodens 3 ausgebildete Ausrichtungsmittel 49 kann als Vorsprung oder wie dargestellt als Rücksprung ausgebildet sein. Durch Koppelung eines nicht näher dargestellten Koppelungsmittels einer Vorrichtung zum Anbringen des Außenteils am Behälter 2 mit diesem Ausrichtungsmittel 49 im Behälterboden 3 kann dieser fixiert werden und auch ausgerichtet werden. Dies kann ein Anbringen des Außenteils 12 sowohl im Falle eines Umwickelns, als auch im Falle eines axialen Aufschiebens erleichtern. Das Ausrichtungsmittel 49 kann beispielsweise auch als Verzahnung im Behälterboden 3 ausgebildet sein. Dies ist insbesondere anhand der Unteransicht gemäß Fig. 10 skizziert. Hierbei ist ein sternförmiges Ausrichtungsmittel 49 bzw. ein Ausrichtungsmittel 49 mit einer zahnradähnlichen Kontur im Boden 3 vorgesehen. Ein Werkzeug bzw. ein Koppelungsmittel einer Vorrichtung kann in das Ausrichtungsmittel 49 eingreifen, beispielsweise durch Verzahnung, Spreizwirkung, sowie Vakuum bzw. Unterdruck. Die erforderliche Ausbildung, sowie eine Höhe einer Erhebung oder eine Tiefe einer Rille oder einer Verzahnung kann dabei an das jeweilige Werkzeug bzw. Koppelungsmittel einer Vorrichtung angepasst werden. Besonders weil der Boden 3 vergleichsweise dick ist, kann ein solches Ausrichtungsmittel 49 gut in den Boden 3 integriert werden.

Die in den Figuren gezeigten Mehrweg-Kunststoffbehälter 2 können in einem Verfahren zur Wiederaufbereitung derart bearbeitet werden, dass eine wiederholte bzw. eine mehrmalige Verwendung ermöglicht ist. Das Verfahren sieht vor, dass ein verwendeter, gebrauchter Behälter 2 bereitgestellt wird, wobei von der Siegelfläche 23 des Siegelrandes 22 eine erste Siegelfolie 24 bereits entfernt ist. Es kann sich bei der entfernten Siegelfolie auch bereits um eine entfernte weitere Siegelfolie 27 handeln. Dies insbesondere, wenn der Mehrweg-Kunststoffbehälter 2 bereits mehrmals in dem Verfahren zur Wiederaufbereitung behandelt wurde. Nachfolgend wird der Mehrweg-Kunststoffbehälter 2 einer ersten erste Reinigung unterzogen, wobei jegliche Füllrückstände entfernt werden. Dies beispielsweise mittels eines Waschprozesses, gegebenenfalls unter Einsatz von Waschmitteln. Gleichzeitig mit der ersten Reinigung, im Zuge der ersten Reinigung oder nach der ersten Reinigung wird die Siegelfläche 23 des Siegelrandes 22 bearbeitet, sodass diese zur Wiederherstellung der Verbindbarkeit der Siegelfläche 23 des Siegelrandes 22 mit einer Siegelfolie 24, 27 geeignet ist. Insbesondere wird durch die Bearbeitung eine ursprünglicher Zustand der Siegelfläche 23 zumindest im Wesentlichen wiederhergestellt. Anschließend wird der Mehrweg-Kunststoffbehälter 2 mit einem Füllgut, wiederbefüllt. Dabei kann es sich um ein dem ursprünglich oder zuvor enthaltenen Füllgut, aber auch um ein anderes Füllgut handeln. Nach dem Wiederbefüllen erfolgt ein Verschließen bzw. ein Versiegeln des Mehrweg-Kunststoffbehälters 2, indem die Siegelfläche 23 des Siegelrandes 22 mit einer weiteren Siegelfolie 27 wiederverbunden wird.

Es kann auch ein Verfahrensschritt vorgesehen sein, beispielsweise welchem nach dem Bearbeiten der Siegelfläche 23 des Siegelrandes 22 und vor dem Wiederbefüllen des Mehrweg-Kunststoffbehälters 2 eine zweite Reinigung des Mehrweg-Kunststoffbehälters 2 zur Entfernung von etwaigen Bearbeitungsrückständen durchgeführt wird. Bei Bearbeitungsrückständen kann es sich beispielsweise um Reinigungsmittelrückstände, oder um Schleifrückstände handeln. Gegebenenfalls kann vor dem Verbinden der weiteren Siegelfolie 27 mit der Siegelfläche 23 des Siegelrandes 22 auf die Siegelfläche 23 des Siegelrandes 22 ein Siegelhilfsmittel 38 aufgebracht werden. Bei der ersten und/oder bei der zweiten Reinigung der Siegelfläche 23 des Siegelrandes 22 kann ein mechanischer, chemischer und/oder ein thermischer Reinigungsschritt durchgeführt werden. Bei der ersten und/oder bei der zweiten Reinigung der Siegelfläche 23 des Siegelrandes 22 kann eine Plasmabehandlung durchgeführt werden. Zudem kann es sein, dass die Siegelfläche 23 des Siegelrandes 22 mit der weiteren Siegelfolie 27 durch Ultraschallschweißen wiederverbunden wird.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Kombi-Verpackungsbehälter | 31 | erster Winkel |
| 2 | Mehrweg-Kunststoffbehälter | 32 | zweiter Winkel |
| 3 | Boden | 33 | Vertiefung |
| 4 | Behältermantel | 34 | Tiefe |
| 5 | offenes Ende | 35 | Masseschwerpunkt |
| 6 | Flansch | 36 | Bodendicke |
| 7 | verschlossenes Ende | 37 | detektierbares Element |
| 8 | Längsachse | 38 | Siegelhilfsmittel |
| 9 | Behälterhöhe | 39 | Gewinde |
| 10 | Gesamthöhe | 40 | Mehrweg-Kunststoffdeckel |
| 11 | Verschlusselement | 41 | Rastelement |
| 12 | Außenteil | 42 | Längserstreckung |
| 13 | Zuschnitt | 43 | Aufnahmebereich |
| 14 | erster Endabschnitt | 44 | Bereich |
| 15 | zweiter Endabschnitt | 45 | Bereich |
| 16 | Überlappungsbereich | 46 | Kegelachse |
| 17 | erste Längskante | 47 | Anschlagbereich |
| 18 | zweite Längskante | 48 | Unterseite |
| 19 | erste Stirnseite | 49 | Ausrichtungsmittel |
| 20 | zweite Stirnseite | | |
| 21 | Bauhöhe | | |
| 22 | Siegelrand | | |
| 23 | Siegelfläche | | |
| 24 | erste Siegelfolie | | |
| 25 | Wandstärke | | |
| 26 | Siegelranddicke | | |
| 27 | weitere Siegelfolie | | |
| 28 | kegelförmiger Abschnitt | | |
| 29 | zylinderförmiger Abschnitt | | |
| 30 | Übergangsabschnitt | | |

## Patentansprüche

1. Becherförmiger Mehrweg-Kunststoffbehälter (2), welcher Mehrweg-Kunststoffbehälter (2) bevorzugt ein lebensmittelechtes Kunststoffmaterial umfasst,
und welcher Mehrweg-Kunststoffbehälter (2) einen Behältermantel (4) umfasst, welcher Behältermantel (4) ein offenes Ende (5) und ein mit einem Boden (3) verschlossenes Ende (7) aufweist,
wobei sich eine Längsachse (8) des Mehrweg-Kunststoffbehälters (2) zwischen dem offenen Ende (5) und dem verschlossenes Ende (7) erstreckt,
und wobei das offene Ende (5) einen Siegelrand (22) mit einer Siegelfläche (23) aufweist, welche Siegelfläche (23) derart ausgebildet ist, dass die Siegelfläche (23) mit einer ersten Siegelfolie (24) verbindbar ist,
**dadurch gekennzeichnet, dass**
der Behältermantel (4) eine Wandstärke (25) aufweist, welche Wandstärke (25) von 0,5 mm bis 4,0mm beträgt,
und dass der Siegelrand (22) eine Siegelranddicke (26) aufweist, welche Siegelranddicke (26) sich in axialer Richtung der Längsachse (8) erstreckt, und welche Siegelranddicke (26) von 0,8 mm bis 4,0 mm beträgt,
und dass die Siegelfläche (23) derart ausgebildet ist, dass die Siegelfläche (23) nach einem Entfernen der ersten Siegelfolie (24) von der Siegelfläche (23) des Siegelrandes (22), und nach einer Reinigung des Mehrweg-Kunststoffbehälters (2) mit einer weiteren Siegelfolie (27) verbindbar ist.

2. Becherförmiger Mehrweg-Kunststoffbehälter (2) nach Anspruch 1, **dadurch gekennzeichnet, dass** der Behältermantel (4) einen kegelförmigen Abschnitt (28) aufweist, welcher kegelförmige Abschnitt (28) sich von dem verschlossenen Ende (7) in Richtung zum offenen Ende (5) erstreckt, und dass der Behältermantel (4) einen zylinderförmigen Abschnitt (29) aufweist, welcher zylinderförmige Abschnitt (29) sich von dem offenen Ende (5) in Richtung zum verschlossenen Ende (7) erstreckt, wobei in radialer Richtung zur Längsachse (8) betrachtet ein Kreisquerschnitt des zylinderförmigen Abschnitts (29) größer ist, als ein maximaler Kreisquerschnitt des kegelförmigen Abschnitts (28).

3. Becherförmiger Mehrweg-Kunststoffbehälter (2) nach Anspruch 2, **dadurch gekennzeichnet, dass** zwischen dem kegelförmigen Abschnitt (28) und dem zylinderförmigen Abschnitt (29) ein kegelförmiger Übergangsabschnitt (30) ausgebildet ist, wobei ein erster Winkel (31) zwischen der Längsachse (8) und dem kegelförmigen Abschnitt (28) kleiner ist, als ein zweiter Winkel (32) zwischen der Längsachse (8) und dem kegelförmiger Übergangsabschnitt (30).

4. Becherförmiger Mehrweg-Kunststoffbehälter (2) nach Anspruch 2 oder 3, **dadurch gekennzeichnet, dass** der Behältermantel (4) mit Vertiefungen (33) ausgebildet ist, welche Vertiefungen (33) sich im Wesentlichen parallel zur Längsachse (8) über den zylinderförmigen Abschnitt (29) erstrecken.

5. Becherförmiger Mehrweg-Kunststoffbehälter (2) nach Anspruch 4, **dadurch gekennzeichnet, dass** die Vertiefungen (33) in radialer Richtung zur Längsachse (8) betrachtet eine Tiefe (34) aufweisen, welche Tiefe (34) von 1% bis 70% der Wandstärke (25) des Behältermantels (4) beträgt.

6. Becherförmiger Mehrweg-Kunststoffbehälter (2) nach einem der vorhergehenden Ansprüche, **dadurch gekennzeichnet, dass** ein Masseschwerpunkt (35) des Mehrweg-Kunststoffbehälters (2) außerhalb der Längsachse (8) liegt.

7. Becherförmiger Mehrweg-Kunststoffbehälter (2) nach Anspruch 6, **dadurch gekennzeichnet, dass** der Masseschwerpunkt (35) des Mehrweg-Kunststoffbehälters (2) entlang seiner Behälterhöhe (9) gesehen in einer dem verschlossenen Ende (7) zugewandten Hälfte der Behälterhöhe (9), insbesondere in einem dem verschlossenen Ende (7) zugewandten Drittel der Behälterhöhe (9), liegt.

8. Becherförmiger Mehrweg-Kunststoffbehälter (2) nach Anspruch 6 oder 7, **dadurch gekennzeichnet, dass** der Boden (3) kreisförmig ist und entlang seines Durchmessers unterschiedliche Bodendicken (36) aufweist, welche Bodendicke (36) zwischen 0,5 mm und 4,0 mm beträgt.

9. Becherförmiger Mehrweg-Kunststoffbehälter (2) nach einem der Ansprüche 6 bis 8, **dadurch gekennzeichnet, dass** die Wandstärke (25) des Behältermantels (4) verschieden ist.

10. Becherförmiger Mehrweg-Kunststoffbehälter (2) nach einem der vorhergehenden Ansprüche, **dadurch gekennzeichnet, dass** auf oder in den Boden (3) und/oder auf oder in den Behältermantel (4) ein detektierbares Element (37) aufgebracht oder eingebracht ist.

11. Becherförmiger Mehrweg-Kunststoffbehälter (2) nach einem der vorhergehenden Ansprüche, **dadurch gekennzeichnet, dass** auf der Siegelfläche (23) des Siegelrandes (22) ein Siegelhilfsmittel (38) aufgebracht ist, bevorzugt ein bevorzugt ein rückstandsfrei entfernbares Siegelhilfsmittel (38) aufgebracht ist.

12. Becherförmiger Mehrweg-Kunststoffbehälter (2) nach einem der vorhergehenden Ansprüche, **dadurch gekennzeichnet, dass** das offene Ende (5) ein Gewinde (39), insbesondere ein Außengewinde, aufweist, welches Gewinde (39) mit einem weiteren Gewinde, insbesondere mit einem Innengewinde, eines als Schraubverschluss ausgebildeten Verschlusselements verbindbar ist.

13. Becherförmiger Mehrweg-Kunststoffbehälter (2) nach einem der vorhergehenden Ansprüche, **dadurch gekennzeichnet, dass** das offene Ende (5) einen Schlagrand aufweist, welcher Schlagrand mit einem als Schlagdeckel ausgebildeten Verschlusselement verbindbar ist.

14. Becherförmiger Mehrweg-Kunststoffbehälter (2) nach einem der vorhergehenden Ansprüche, **dadurch gekennzeichnet, dass** der Siegelrand (22) derart ausgebildet ist, dass der Siegelrand (22) mit Rastelementen (41) eines als Mehrweg-Kunststoffdeckel (40) ausgebildeten Verschlusselements in Eingriff bringbar ist.

15. Becherförmiger Mehrweg-Kunststoffbehälter (2) nach einem der vorhergehenden Ansprüche, **dadurch gekennzeichnet, dass** der Mehrweg-Kunststoffbehälter (2) als Kombi-Verpackungsbehälter (1) ausgebildet ist und ein Außenteil (12) umfasst, welches Außenteil (12) den Mehrweg-Kunststoffbehälter (2) ummantelt, wobei das Außenteil (12) aus einem Zuschnitt (13) gebildet ist, welcher Zuschnitt (13) eine im Wesentlichen kreisringsegmentförmige Grundform aufweist, welcher Zuschnitt (13) einen ersten Endabschnitt (14) und einen zweiten Endabschnitt (15) aufweist, wobei der Zuschnitt (13) zu einem Mantel gewickelt ist und dabei der erste Endabschnitt (14) und der zweite Endabschnitt (15) in einem Überlappungsbereich (16) miteinander gekoppelt sind, wobei das Außenteil (12) weiters eine erste Stirnseite (19) und eine zweite Stirnseite (20) aufweist und die erste Stirnseite (19) und die zweite Stirnseite (20) voneinander beabstandet sind, wobei das Außenteil (12) eine Längserstreckung (42) in einer Richtung ausgehend von der ersten Stirnseite (19) zur zweiten Stirnseite (20) aufweist.

16. Becherförmiger Mehrweg-Kunststoffbehälter (2) nach Anspruch 15, **dadurch gekennzeichnet, dass** der Mantel des Außenteils (12) einen Aufnahmebereich (43) und einen Bereich (44) aufweist, welcher Bereich (44) in Längserstreckung (42) betrachtet zwischen dem Aufnahmebereich (43) und der zweiten Stirnseite (20) angeordnet ist, und dass ein Bereich (45) des offenen Endes (5) in dem Aufnahmebereich (43) des Mantels des Außenteils (12) aufgenommen ist.

17. Becherförmiger Mehrweg-Kunststoffbehälter (2) nach einem der vorhergehenden Ansprüche, **dadurch gekennzeichnet, dass** der Behälter (2) im Bereich seines Bodens (3) ein Ausrichtungsmittel (49), insbesondere eine Rille oder eine Erhebung, aufweist, welche zur Fixierung und/oder zur Positionierung des Behälters (2) ausgebildet ist.

18. Verfahren zur Wiederaufbereitung eines becherförmigen Mehrweg-Kunststoffbehälters (2), insbesondere eines Mehrweg-Kunststoffbehälters (2) nach einem der Ansprüche 1 bis 17, umfassend die Verfahrensschritte:
- Bereitstellen eines becherförmigen Behälters (2), welcher Mehrweg-Kunststoffbehälter (2) einen Behältermantel (4) umfasst, welcher Behältermantel (4) ein offenes Ende (5) und ein mit einem Boden (3) verschlossenes Ende (7) aufweist, wobei sich eine Längsachse (8) des Mehrweg-Kunststoffbehälters (2) zwischen dem offenen Ende (5) und dem verschlossenes Ende (7) erstreckt, und wobei das offene Ende (5) einen Siegelrand (22) mit einer Siegelfläche (23) aufweist, von welcher Siegelfläche (23) eine erste Siegelfolie (24) entfernt ist,
- erste Reinigung des Mehrweg-Kunststoffbehälters (2) zur Entfernung von Füllrückständen ,
- Bearbeiten der Siegelfläche (23) des Siegelrandes (22) zur Wiederherstellung der Verbindbarkeit der Siegelfläche (23) des Siegelrandes (22) mit einer Siegelfolie (24, 27),
- Wiederbefüllen des Mehrweg-Kunststoffbehälters (2) mit einem Füllgut,
- Wiederverbinden der Siegelfläche (23) des Siegelrandes (22) mit einer weiteren Siegelfolie (27).

19. Verfahren nach Anspruch 18, **dadurch gekennzeichnet, dass** nach dem Bearbeiten der Siegelfläche (23) des Siegelrandes (22) und vor dem Wiederbefüllen des Mehrweg-Kunststoffbehälters (2) eine zweite Reinigung des Mehrweg-Kunststoffbehälters (2) zur Entfernung von Bearbeitungsrückständen durchgeführt wird.

20. Verfahren nach Anspruch 18 oder 19, **dadurch gekennzeichnet, dass** vor dem Verbinden der weiteren Siegelfolie (27) mit der Siegelfläche (23) des Siegelrandes (22) auf die Siegelfläche (23) des Siegelrandes (22) ein Siegelhilfsmittel (38) aufgebracht wird.

21. Verfahren nach einem der Ansprüche 18 bis 20, **dadurch gekennzeichnet, dass** bei der ersten und/oder bei der zweiten Reinigung der Siegelfläche (23) und/oder bei der des Siegelrandes (22) ein mechanischer, chemischer und/oder beim Bearbeiten der Siegelfläche (23) des Siegelrandes (22) ein thermischer Reinigungsschritt durchgeführt wird.

22. Verfahren nach einem der Ansprüche 18 bis 21, **dadurch gekennzeichnet, dass** bei der ersten und/oder bei der zweiten Reinigung der Siegelfläche (23) des Siegelrandes (22) eine Plasmabehandlung durchgeführt wird.

23. Verfahren nach einem der Ansprüche 18 bis 22, **dadurch gekennzeichnet, dass** die Siegelfläche (23) des Siegelrandes (22) mit der weiteren Siegelfolie (27) durch Ultraschallschweißen wiederverbunden wird.
